# EUROPEAN PATENT SPECIFICATION

(11) **EP 4 137 332 B1**
(45) Date of publication and mention of the grant of the patent: **17.01.2024**
(21) Application number: 21192052.5
(22) Date of filing: 19.08.2021
(51) Int. Cl.: B60C 11/03, B60C 11/12, B60C 11/13

(54) **A TREAD BLOCK ARRANGEMENT FOR A TIRE OR FOR A TREAD BAND**
LAUFFLÄCHENBLOCKANORDNUNG FÜR EINEN REIFEN ODER FÜR EIN LAUFFLÄCHENBAND
AGENCEMENT DE BLOC DE BANDE DE ROULEMENT D'UN PNEU OU D'UNE BANDE DE ROULEMENT

(43) Date of publication of application: 22.02.2023
(73) Proprietor: Nokian Renkaat Oyj, 37101 Nokia (FI)
(72) Inventor: TIKKA, Jorma, 33250 Tampere (FI); LEPISTÖ, Samu, 33720 Tampere (FI)
(74) Representative: Berggren Oy

(56) References cited:
- EP-B1- 3 403 852
- WO-A1-2014/092078
- WO-A1-2020/217964
- CN-A- 102 922 953
- CN-A- 108 688 411
- DE-A1- 4 237 559
- JP-A- H0 310 911
- JP-A- H0 825 917
- JP-A- 2018 177 094
- US-A- 5 105 864
- US-A1- 2011 162 770

## Description

### Technical field

The invention relates to vehicle tires. The invention relates to tread bands used for vehicle tires. The invention relates to a tread of tire or a tread band.

### Background

The surface of a tire forms a tread, which forms, when the tire is in use, a rolling contact against a ground surface. The tread is responsible for grip, handling, and other driving properties of the tire. The tread limits grooves that guide water and/or slush away to help the other parts of the tread to grip the ground. The grooves are left in between tread blocks. The properties of a tire are constantly developed in order to improve grip and/handling of the tire. Particularly in winter tires the groove pattern is important, since slush is much harder to remove from under the tire than water.

Prior art in this field include the following documents: DE4237559A1, which discloses a pneumatic tire having a plurality of circumferential main grooves and a plurality of V-shaped auxiliary grooves, the apexes of the V-shaped auxiliary grooves extending in one of the circumferential directions and being distributed substantially equally in left and right halves extending from the equatorial plane of the tire. US2011162770A1, which discloses a pneumatic tire simultaneously achieving both enhanced on-ice performance and enhanced durability. EP3403852B1, which discloses a tire having a tread portion comprising a plurality of first oblique grooves extending obliquely from a first tread edge positioned on one side in a tire axial direction toward a tire equator. US5105864A, which discloses a pneumatic tire equipped on its tread surface with a plurality of main grooves extending in a tire circumferential direction and transverse grooves extending from the center portion to shoulder portions while crossing the main grooves. JPH0825917A, which discloses a pneumatic tire for running on icy and snowy roads, and more particularly a pneumatic tire having excellent running performance on ice without deteriorating running performance on snow. JP2018177094A, which discloses a tire capable of exhibiting excellent snow performance while maintaining steering stability on a dry road surface. CN108688411A, which discloses a pneumatic tire capable of maintaining steering stability on a dry road surface and snow performance, and effectively suppressing the slip phenomenon. CN102922953A, which discloses an all-weather tire, in particular a kind of all-weather tire of single guiding V-type decorative pattern. JP403010911A, which discloses a high performance pneumatic tire for passenger cars, and more particularly a high performance pneumatic tire for a passenger car which effectively prevents the occurrence of a hydroplaning phenomenon and enables effective reduction of pattern noise. WO2014092078A1, which discloses a tire capable of improving dry performance while suppressing a decrease in snow performance. And WO2020217964A1, which discloses a pneumatic tire in which a plurality of first land sections are arranged so as to be adjacent to each other in the circumferential direction, and a plurality of second land sections are arranged so as to be adjacent to each other in the circumferential direction.

### Summary

The purpose of the present invention is to present a tread block arrangement forming a tread of a tire or a tread band for a tire, which, when applied on a tire, improves grip and handling on snow, ice, and bare road. In particular, the tread has been observed to function well on a pneumatic winter tire for a passenger car.

In particular, it has been found, on one hand, that particularly edges of tread blocks improve grip and traction of a tire. Moreover, the number of edges can be increased by increasing a number of the tread blocks of the tread. This can be achieved by using smaller tread blocks. However, on the other hand, handling can be improved by supporting the tread blocks. The tread blocks may be supported by each other, e.g. by having larger and smaller tread blocks neighboring each other and/or by providing some grooves with bottom protrusions, the bottom protrusions supporting the tread blocks to each other.

The invention is disclosed in appended independent claim 1. The dependent claims disclose preferable embodiments. The description and figures disclose, in addition, other embodiments.

### Brief description of the drawings

- Fig. 1a: shows a pneumatic tire having a tread block arrangement forming the tread of the tire, the tread block arrangement limiting a groove pattern,
- Fig. 1b: shows applying a tread band onto a preform of a tire,
- Fig. 2a: shows a part of a tread block arrangement, in particular boundaries and a central line defined by tread blocks of the tread block arrangement,
- Fig. 2b: shows a part of a tread block arrangement, in particular pitches and main grooves thereof,
- Fig. 3a: shows a part of a tread block arrangement, in particular numbering of some tread blocks and widths of certain regions,
- Fig. 3b: shows a part of a tread block arrangement, in particular pitch grooves of the arrangement,
- Fig. 3c: shows a part of a tread block arrangement, in particular lengths and widths of some tread blocks,
- Fig. 3d: shows a part of a tread block arrangement, in particular lengths of pitches,
- Fig. 4a: shows a part of a tread block arrangement, in particular multiple pitches thereof,
- Fig. 4b: shows a contact patch of a tire, i.e. the portion of the tire that is in actual contact with the road surface,
- Fig. 4c: shows a part of a tread block arrangement, in particular bottom protrusions of pitch grooves,
- Fig. 4d: shows a different numbering for the pitches of Fig. 4c,
- Fig. 5: shows sipes within the tread blocks,
- Fig. 6a: shows a width of a main groove,
- Fig. 6b: shows angles of extension for the main groove,
- Fig. 6c: shows angles of extension for the main groove as defined by edges of tread blocks,
- Fig. 7a: shows a reflective symmetric tread block arrangement, and
- Fig. 7b: shows a tread block arrangement that can be made reflective symmetric by moving the tread blocks of only the first or the second half in the longitudinal direction.

### Detailed description

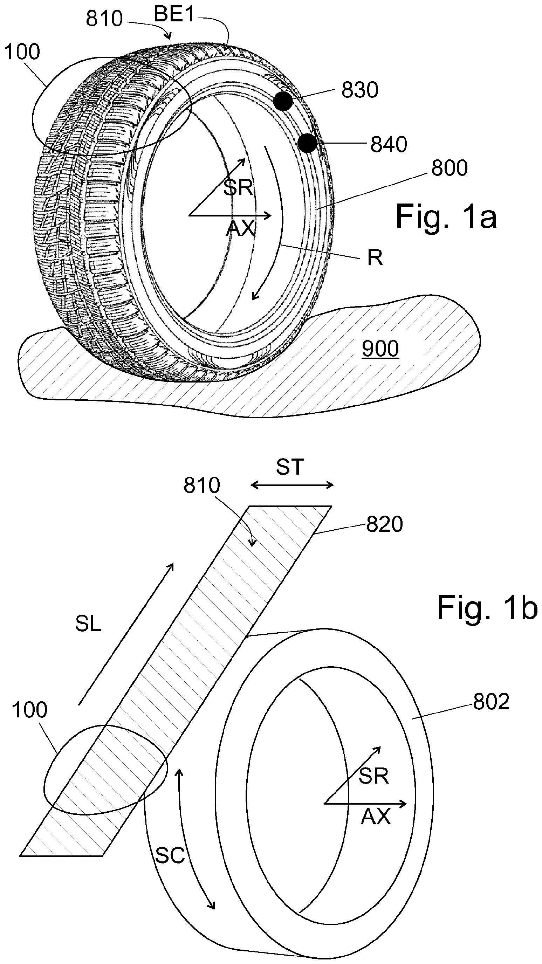

Fig. 1a shows a pneumatic tire 800 having a tread block arrangement 100 forming a tread 810 of the tire 800. The tread 810 of the tire 100 (or of a tread band 820) refers to the part that makes contact with the ground surface 900 (e.g. the road or the ground) when in use. The tread 810 is meant for a rolling contact against a ground surface 900. The tread block arrangement comprises tread blocks 111, 121, 112, 211, etc. i.e. blocks, as will be detailed below.

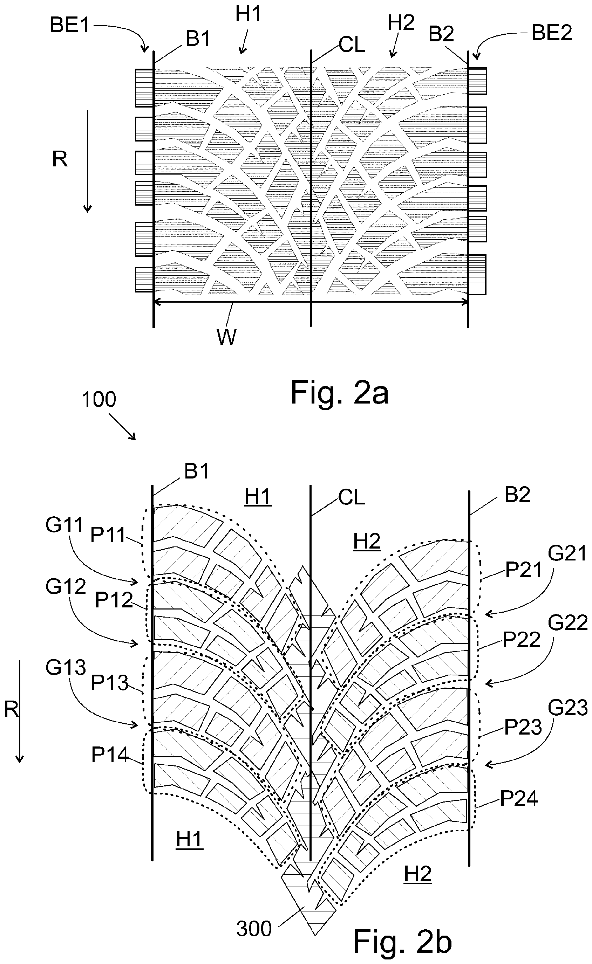

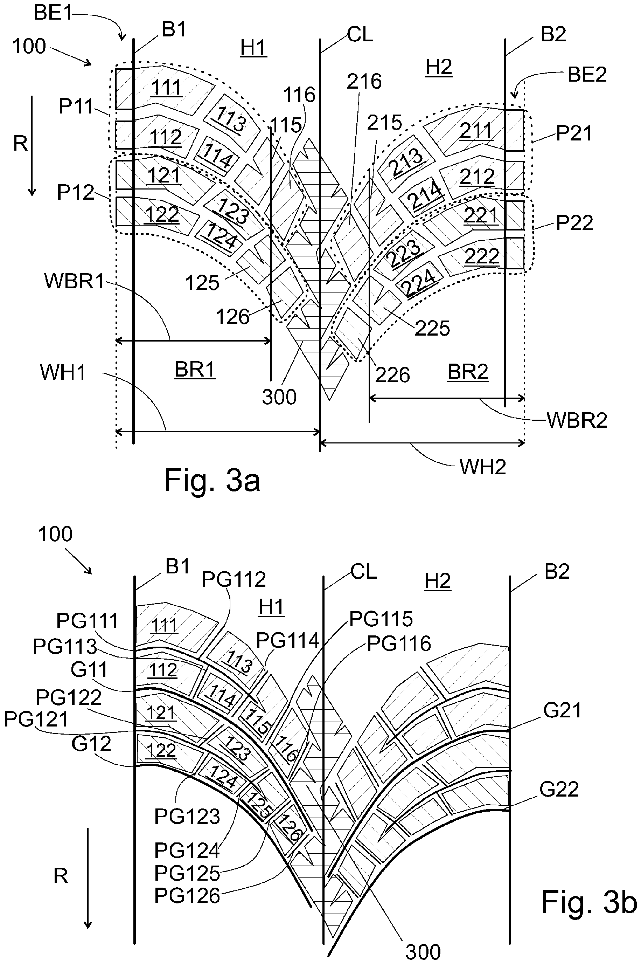

Close to a first side wall of the tire 800, the tread blocks forming the tread comprise a first bevelled edge BE1 so that first bevelled edge does not make contact with the ground surface 900 (e.g. the road or the ground) when in use. Close to a second side wall of the tire 800, the tread blocks forming the tread comprise a second bevelled edge BE2 so that second bevelled edge does not make contact with the ground surface 900 (e.g. the road or the ground) when in use. A first bevelled edge BE1 is shown in Figs. 1a, 2a, and 3a; and a second bevelled edge BE2 is shown in Figs. 2a and 3a.

The direction of rotation of the tire 800 is indicated by the arrow R in Fig. 1a. The direction of rotation R indicates the direction rotation of the tire 800 when driving forward. The direction of rotation is parallel to a circumferential direction SC of the tire. The axial and radial directions of the tire 800 are indicated by the AX and SR, respectively. The tread block arrangement 100 can be formed onto the tire 800 e.g. in a moulding process. A longitudinal direction SL (See Fig. 1b) of the tread block arrangement is parallel to the circumferential direction SC of the pneumatic tire 100; and curves along the circumferential direction SC when the tread block arrangement 100 is on a tire 800. Moreover, at each point, the longitudinal direction SL of the tread block arrangement, i.e. the circumferential direction SC, is perpendicular to a transversal direction AX and perpendicular to the thickness T (see Figs. 1b and 1c) of the tread block arrangement 100. The thickness T is, on a tire, substantially parallel to the radial direction SR.

As an alternative to moulding, the tread 810 of a tire 800 can be made by applying a tread band 820 onto a preform 802 of a tire to form the tire 800 with the tread 810. Referring to Fig. 1b, the tread band 820 may be a band extending in a longitudinal direction SL. Herein the longitudinal direction SL is perpendicular to a transversal direction ST and perpendicular to the thickness T of the tread band 820.

Before applying the tread band onto the tire, the tread band needs not curve along the circumferential direction. However, when applied onto the preform 802, the circumferential direction SC of the preform 802 is parallel with the longitudinal direction SL of the tread band 820. The tread band 820 has also a transversal direction ST, which is configured to be parallel with the axial direction AX of the preform 802, when applied thereto. The tread 810 of the tread band 820 faces outwards, and forms the tread 810 of the tire 800. In this way, the tread band 820 also comprises a tread block arrangement 100 forming the tread 810.

Fig. 2a shows a part of a tread 810 according to an embodiment. The tread is constituted by tread blocks. Fig. 2a shows also the bevelled edges BE1 and BE2. As the bevelled edges do not normally contact the surface while driving, the bevelled edges are not considered to be part of the tread. As known to a skilled person and shown in the Fig. 2a, tread blocks are separated from each other by grooves.

Fig. 2b shows a part of a tread 810 according to an embodiment. In other words, Fig. 2b shows an embodiment of a tread block arrangement 100. The bevelled edges BE1 and BE2 are not shown in Fig. 2b, but the tread blocks defining the boundaries B1 and B2 may comprise also the bevelled edges, even if not shown. This applies also to other figures. The tread blocks of the tread block arrangement 100 define a first boundary B1 and a second boundary B2. The boundaries are the parts where the bevelled edge (BE1 or BE2) changes to the tread 810. The second boundary B2 is parallel to the first boundary B1 and arranged a width W apart from the first boundary B1. Referring to Fig. 1a, a direction of the width W is parallel to the axial direction, when the tread block arrangement is arranged on a tire 800. Referring to Fig. 1b, a direction of the width W is parallel to the transversal direction ST of the tread band 820, when the tread block arrangement is arranged on a tread band 820.

The boundaries B1 and B2 define a central line CL, which is between the first boundary B1 and the second boundary B2. Thus, a first half H1 of the tread block arrangement 100 is arranged on a first side of the central line CL. In a similar manner, a second half H2 of the tread block arrangement 100 is arranged is arranged on a second side of the central line CL, the second side being on the other side of the central line than the first side. Moreover, the first half H1 and the second half H2 meet at the central line CL so that no part of the tread block arrangement is arranged between the first half and the second half H2. The central line is arranged at the centre of the tread block arrangement so that a width WH1 of the first half H1 is equal to a width WH2 of the second half H2. Reference is made to Fig. 3a.

Referring to Fig. 2b, the tread block arrangement comprises pitches P11, P12, P13, P14, P21, P22, P23, P24. In addition, a preferable embodiment comprises a middle block 300. The middle block 300 is arranged between (A) pitches P11, P12, P13, P14 that are arranged on the first half H1 and (B) pitches P21, P22, P23, P24 that are arranged on the second half H2.

Each one of the pitches extend from the first or second boundary (B1, B2) towards the central line CL in an inclined manner. Thus the pitches P11, P12, P13, P14 that are arranged on the first half H1 form, with the pitches P21, P22, P23, P24 that are arranged on the second half H2 V-shapes that open in a direction that is reverse to the direction R of rotation. Reference is made to Figs. 2b, 3a, and 3b. The pitches P11, P12, P13, P14 that are arranged on the first half H1 are separated from each other by main grooves G11, G12, G13. The pitches P21, P22, P23, P24 that are arranged on the second half H2 are separated from each other by main grooves G21, G22, G23. A purpose of the main grooves G11, G12, G13, G21, G22, G23 is to guide water and/or slush from the contact patch (i.e. contact area of the tire 800) to the boundaries B1, B2 of the tread so as to improve grip. Thus, also the main grooves extend from extend in an inclined manner from the first or second boundary (B1, B2) towards the central line CL. Preferably, the main grooves extend from the first or the second boundary B1, B2 to the middle block 300.

In this way, the pitches on one side of the tread block arrangement improve grip by providing the main grooves that guide the slush and/or water away from a contact area of the tire 800. Moreover, having the pitches also simplifies the design of the tread 810, since the tread 810 can be built up from successive pitches and, optionally, a central tread block 300 only.

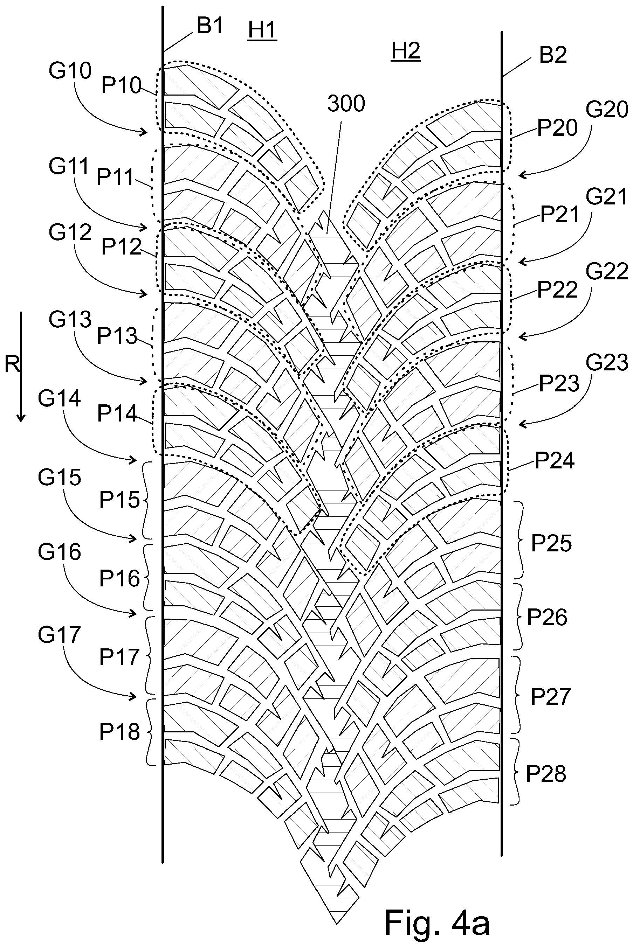

Referring to Figs. 2b, 3a, and 3b, the first half H1 of tread block arrangement 100 thus comprises a first primary pitch P11 extending in an inclined manner from the first boundary B1 towards the central line CL. The first half H1 of tread block arrangement 100 thus comprises a first secondary pitch P12. The first secondary pitch P12 is arranged next to the first primary pitch P11. Thus, the first secondary pitch P12 is separated from the first primary pitch P11 only by a first primary main groove G11. The first secondary pitch P12 extends in an inclined manner from the first boundary B1 towards the central line CL. The first secondary pitch P12 may be separated from a first tertiary pitch P13 by a first secondary main groove G12, preferably only by the first secondary main groove G12. Such a first secondary main groove G12 is shown in Figs. 2b and 4a.

As detailed above, a relatively high number of the tread blocks indicates a high amount of edges of the tread blocks, which improves grip and traction of the tire. It has been found that good grip particularly at the areas close to the boundaries (B1, B2) is good for lateral grip. Therefore, the number and amount of tread block edges is relatively high close to the first boundary B1; i.e. on a first region BR1 that extends from the first boundary towards the central line CL.

Therefore, and with reference to Fig. 3a, the first primary pitch P11 comprises at least four tread blocks (111, 112, 113, 114) arranged on the first region BR1 of the first half H1 and separated from each other by pitch grooves. In the claimed invention, the first primary pitch P11 comprises at least four tread blocks (111, 112, 113, 114) arranged within the first region BR1 and separated from each other by grooves. In a similar manner, the first secondary pitch P12 comprises at least four tread blocks (121, 122, 123, 124) arranged on the first region BR1 and separated from each other by pitch grooves. In the claimed invention, the first secondary pitch P12 comprises at least four tread blocks (121, 122, 123, 124) arranged within the first region BR1 and separated from each other by grooves. Herein the first region BR1 is a region close to the first boundary B1 and comprising the first boundary. More precisely, the first region BR1 comprises all the tread blocks defining the first boundary B1, that is, also the bevelled edges BE1 thereof, and extends towards the central line CL.

Moreover, a width WBR1 of the first region BR1 is at most 75 % of a width WH1 of the first half H1; preferably at most 70% of the WH1 of the first half H1. Reference is made to Fig. 3a, which shows the widths. As indicated therein, the width WBR1 is defined in the transversal direction ST of the tread block arrangement, which, in case of a tire is parallel to the axial direction AX. This results in a reasonably high number and amount of tread block edges close to the first boundary B1.

The pitch grooves that separate the at least four tread blocks (111, 112, 113, 114) of a pitch comprise transversal parts and longitudinal parts, as detailed in Fig. 3b. For example, the pitch groove PG111 may extend substantially parallel to the main groove G11. As indicated in the figures, in particular 6a, the main groove G11 is not necessarily straight. Thus, the pitch groove PG111 may extend e.g. in such a way that at each position in the transversal direction ST, a longitudinal direction of the pitch groove PG111 at that location forms an angle of at most 10 degrees with a longitudinal direction of the main groove G11 at that location. Herein the term "that location" refers to a longitudinal line defined only by the distance from the first boundary B1 as measured in the transversal direction. Thus, at locations that are equally far from the first boundary B1, the direction of extension of the pitch groove PG111 may be substantially parallel to the direction of extension of the main groove G11, as defined by the angle in more detail above. Naturally the grooves PG111 and G11 need not cross each other.

Moreover, a pitch groove PG112 may be substantially transversal to the pitch groove PG111, and a pitch groove PG113 may be substantially transversal to the pitch groove PG111. The term "substantially transversal" refers e.g. to an angle of at least 60 degrees between the directions of extension at least at the point where the pitch grooves cross each other.

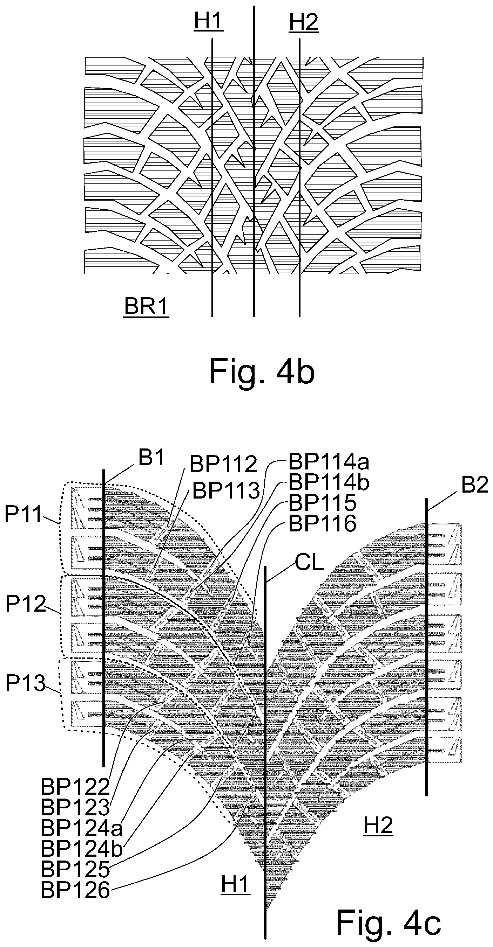

Similar pitches can be arranged next to each other to obtain a lengthy tread block arrangement. For example, Fig. 4a shows eight first pitches P1i, wherein i=1, 2, 3, ... , 8; and eight second pitches P2i, wherein i=1, 2, 3, ... , 8. The first pitches P1i are arranged on the first half H1 and the second pitches P2i are arranged on the second half H2. Every second of the first pitches may be similar and identical with each other. Thus, in an embodiment, the first pitches P11, P13, P15, and P17 are similar or identical. Moreover, in an embodiment, the first pitches P12, P14, P16, and P18 are similar or identical. In a similar manner, in an embodiment every second of the second pitches are similar or identical with each other. Thus, in an embodiment, the second pitches P21, P23, P25, and P27 are similar or identical. Moreover, in an embodiment, the second pitches P22, P24, P26, and P28 are similar or identical. This is shown in Figs. 2a and 4b by hatching of the pitches. The first pitches P11, P13, P15, and P17, which are similar or identical with each other, are shown with a hatching from low-left to up-right. The first pitches P12, P14, P16, and P18, which are similar or identical with each other, but different from the first pitch P11, are shown with a hatching from low-right to up-left. This applies to the second pitches P2i, i=1,2,3,..., 8, too, *mutatis mutandis.*

As for construing the tread block arrangement from the pitches, the tread block arrangement may comprise multiple pitches arranged next to each other in the longitudinal direction, as depicted e.g. in Fig. 4a. The tread block arrangement may comprise pitches of at least two different sizes; preferably pitches of only three different sizes; such as small, medium, and large. When the tread block arrangement comprises pitches of at least two different sizes, at least at some point, two neighbouring pitches are of different size.

However, at the same time, two neighbouring pitches may be identical. Thus, their lengths are also identical. Typically several, e.g. 2, 3, 4, or even 5 identical pitches are arranged subsequently, i.e. so that no other pitch is arranged therein between. However, in order to reduce noise, a pitch of another type (e.g. smaller or larger) is arranged next to the sequence of the multiple identical pitches. It depends e.g. on the size of the tire how the tread block arrangement is made up from the pitches.

The numbering of the pitches, e.g. P11, P12, P13 is arbitrary, as long as the first primary pitch P11 is next to the first secondary pitch P12; and first secondary pitch P12 is next to the first tertiary pitch P13; and so on. Herein two pitches are next to each other, when they are separated only by a main groove G1i, i=1, 2, 3, ..., 7 (see Fig. 4a).

The first primary pitch P11 may be arranged between two other pitches. For reasons of indicating this, Fig. 4a shown also a first zeroth ranking pitch P10 that is arranged next to the first primary pitch P11. Thus, the first zeroth ranking pitch P10 is separated from the first primary pitch P11 only by the main groove G10. This applies *mutatis mutandis* to the second zeroth ranking pitch P20 and the main groove G20 shown in Fig. 4a. The first zeroth ranking pitch P10 may be, but need not be, identical to the first secondary pitch P12. The first zeroth ranking pitch P10 may be, but need not be, identical to the first primary pitch P11.

However, the pitches may be arranged relative to each other in a different manner. For example, in the embodiment of Fig. 4c, the first primary pitch P11 is identical to the first secondary pitch P12. However, the first tertiary pitch P13 is different. For example, a length of the first tertiary pitch P13 is smaller than a length of the first secondary pitch P12.

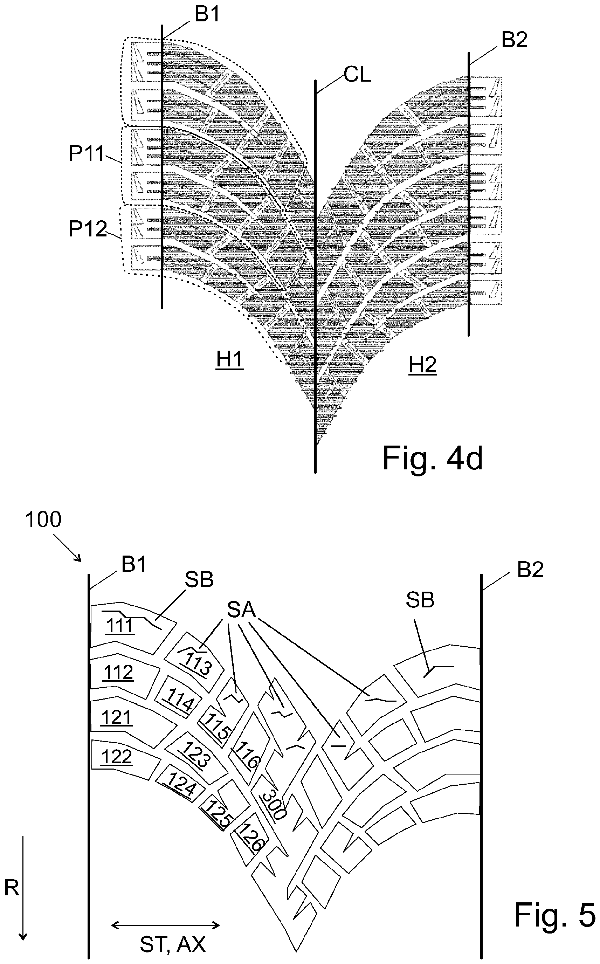

Preferably, the first secondary pitch P12, which is arranged next to the first primary pitch P11, is different from the first primary pitch P11. As detailed above, this improves support between the tread blocks. Moreover, this may reduce noise generated by driving. It is noted that the numbering of the pitches of Fig. 4c may be changed so that this applies also for such a tread block arrangement. This is shown in Fig. 4d, which shows the tread block arrangement of Fig. 4c but having the pitches numbered in a different manner.

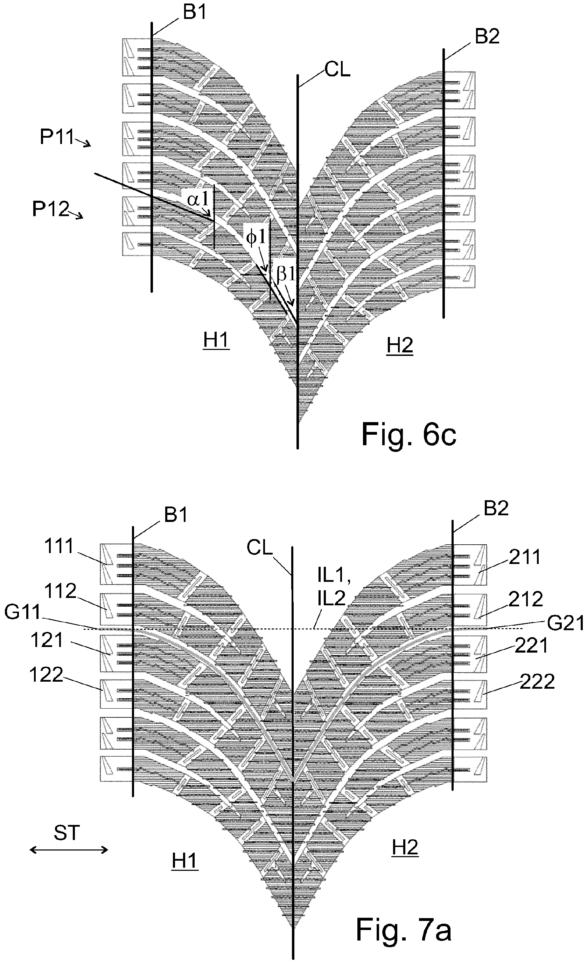

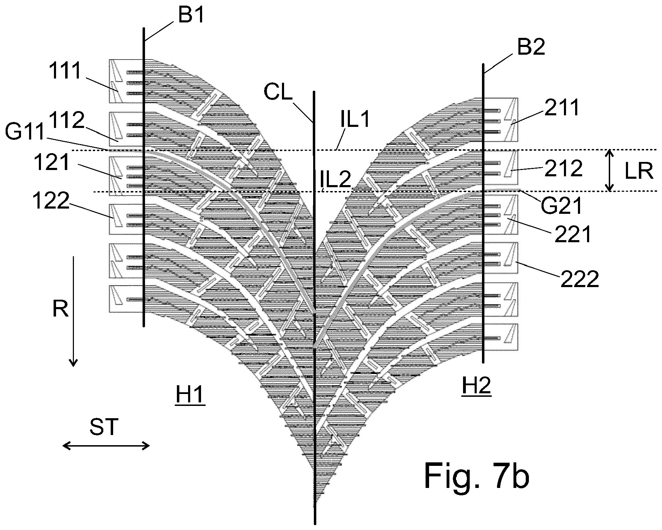

In addition, the first primary pitch P11 is reflective symmetric with the second primary pitch P21; however, as shown in the figures (except 7a), in an embodiment, they are not arranged at the same position in the longitudinal or circumferential direction (SL, SC). Moreover, the first secondary pitch P12 is reflective symmetric with the second secondary pitch P22; however, as shown in the figures (except 7a), in an embodiment, they are not arranged at the same position in the longitudinal or circumferential direction (SL, SC). As depicted in Fig. 7b, a pattern of the first primary pitch P11 can be aligned with a pattern of the second primary pitch P21 by moving the first primary pitch P11 by a distance of LR in the rotational direction R, in order to have reflective symmetric patterns for the pitches.

The tread block arrangement 100 may be arranged on a tire 800. In such a case, the first and second boundaries (B1, B2) constitute boundaries of a tread 810 of the tire 800.

The large number of tread block shows, in particular, in the contact patch of the tire 800. The term footprint is used interchangeably with the term contact patch. The contact patch of the tire is the portion of a vehicle's tire (i.e. the tread thereof) that is in actual contact with the road surface. It other words, the contact patch describes the portion of the tire's tread that touches the road surface.

Because the contact patch is the only connection between the road and the vehicle, the size and shape of the contact patch as well as the pressure distribution within the contact patch are important to the ride qualities and handling characteristics of a vehicle.

The contact patch extends a certain length along the circumference of the tire 800. As an example, Fig. 4b shows a contact patch of a tire provided with the tread block arrangement as discussed above and e.g. in Fig. 4a. As shown in these figures, only a certain length of the tread block arrangement (of e.g. Fig. 4a) forms the contact patch (of Fig. 4b). The length of the contact patch may depend on the pressure of the tire. However, herein the term contact patch refers to the contact patch of the tire, when inflated to the intended pressure, and when the tire is used with a car as intended.

Thus, in an embodiment, sizes of the first primary pitch P11 and the first secondary pitch P12 are selected such that a contact patch of the tire 800 comprises at least twelve (12 pcs) tread blocks of the primary half H1. More preferably, the contact patch of the tire 800 comprises at least 12 tread blocks of the primary half H1, at least 12 tread blocks of the secondary half H2, and a part of the middle block 300. However, the number of the tread blocks of the contact path may depend also on the size of the tire, and may be less than this.

In an embodiment, a contact patch of the tire 800 comprises the first primary pitch P11 and the first secondary pitch P12. However, the shape of the contact patch depends on the angular position of the tire. As the tire advances on a road, the shape of the contact patch changes. All possible contact patches need not comprise all the tread blocks of the first primary pitch P11 and the first secondary pitch P12. However, preferably, at least a contact patch comprises (a) a tread part of the four tread blocks (111, 112, 113, 114) of the first primary pitch P11 that are arranged within the first region BR1 and (b) a tread part of the four tread blocks (121, 122, 123, 124) of the first secondary pitch P12 that are arranged within the first region BR1. Herein the term "tread part" refers to the part of the tread block forming the tread. As discussed above, the bevelled edges BE1, BE2 do not, in general, form the tread.

As detailed above, the tread block arrangement 100 may comprise a middle block 300. Referring to Figs. 2a, 2b, 3a, 3b, and 4a, an embodiment of the tread block arrangement 100 comprises an integral middle block 300. Herein the term "integral" means the middle block 300 is only one block. In other words, the term "integral" means that each point of the integral middle block can be connected by a line to each other point of the integral middle block such that the line connecting the points does not cross a groove. Moreover, the integral middle block 300 propagates through the tread block arrangement 100 parallel to the first boundary B1 and between the first boundary B1 and the second boundary B2. The middle block 300 is arranged in the middle of the tread block arrangement such that the first primary pitch P11 is arranged on a first side of the middle block 300 and the first secondary pitch P12 is arranged on the first side of the middle block 300.

When the tread block arrangement comprises pitches also on the second half H2, the middle block 300 is arranged in the middle of the tread block arrangement such that the second primary pitch P21 is arranged on a second side of the middle block 300, the second side being opposite to the first side; and the second secondary pitch P22 is arranged on the second side of the middle block 300.

As indicated above, the pitches P1i and P2i comprise tread blocks. The tread blocks are separated from each other by pitch grooves. For example, Fig. 3a shows in detail the tread blocks while Fig. 3b shows in detail the grooves (main grooves and pitch grooves) in between the tread blocks.

Referring to Figs. 3a and 3b, in an embodiment, the first primary pitch P11 comprises a first primary first block 111 defining the first boundary B1 of the tread. The first primary pitch P11 comprises a first primary second block 112 defining the first boundary B1. The first primary second block 112 is separated from the first primary first block 111 only by a portion of a first primary first pitch groove PG111. In Fig. 3b, the first primary first pitch groove PG111 is preferably substantially parallel to the first primary main groove G11 (for a more precise definition of these directions, see above).

The first primary pitch P11 comprises a first primary third block 113. The first primary third block 113 is arranged a distance apart from the first boundary, i.e. the block 113 does not define the first boundary B1. The first primary third block 113 is separated from the first primary first block 111 only by a first primary second pitch groove PG112. A longitudinal direction of the first primary second pitch groove PG112 forms an angle of at least 60 degrees with a longitudinal direction of the first primary first pitch groove PG111. The first primary second pitch groove PG112 may be substantially transversal to the first primary first pitch groove PG111. The first primary second pitch groove PG112 extends from the first primary first pitch groove PG111 in its longitudinal direction.

The first primary pitch P11 comprises a first primary fourth block 114. The first primary fourth block 114 is arranged a distance apart from the first boundary B1, i.e. the block 114 does not define the first boundary B1. The first primary fourth block 114 is separated from the first primary second block 112 only by a first primary third pitch groove PG113. A longitudinal direction of the first primary third pitch groove PG113 forms an angle of at least 60 degrees with a longitudinal direction of the first primary first pitch groove PG111. The first primary third pitch groove PG113 may be substantially transversal to the first primary first pitch groove PG111. The first primary third pitch groove PG113 extends from the first primary first pitch groove PG111 in its longitudinal direction. The first primary fourth block 114 is separated from the first primary third block 113 only by a portion of the first primary first pitch groove PG111.

The first primary first block 111, the first primary second block 112, the first primary third block 113, and the first primary fourth block 114 are arranged on the first region BR1 (see Fig. 3a) having the width WBR1 as discussed above. At least a part of the first primary third block 113 is arranged between the central line CL and the first primary first block 111, and at least a part of the first primary fourth block 114 is arranged between the central line CL and the first primary second block 112. These features, in combination, have the effect that a width of the tread blocks at first region BR1 is small, which improves the grip in particular in the axial direction of the tire.

In an embodiment, the first primary pitch P11 comprises only two tread blocks that define the first boundary B1; as indicated above, such tread blocks are the first primary first block 111 and the first primary second block 112. No tread block is arranged between the first boundary B1 and such a tread block (111, 112) that defines the first boundary B1.

As for the tread blocks of a pitch supporting each other and in this way improving the handling of the tire, there are at least two possibilities. First, a length and/or a width of the tread blocks may be different. Second, such pitch grooves that are substantially longitudinal can be provided with a bottom protrusion. A bottom protrusion makes the pitch groove that has the bottom protrusion somewhat shallower, which provides for lateral support between neighbouring tread blocks.

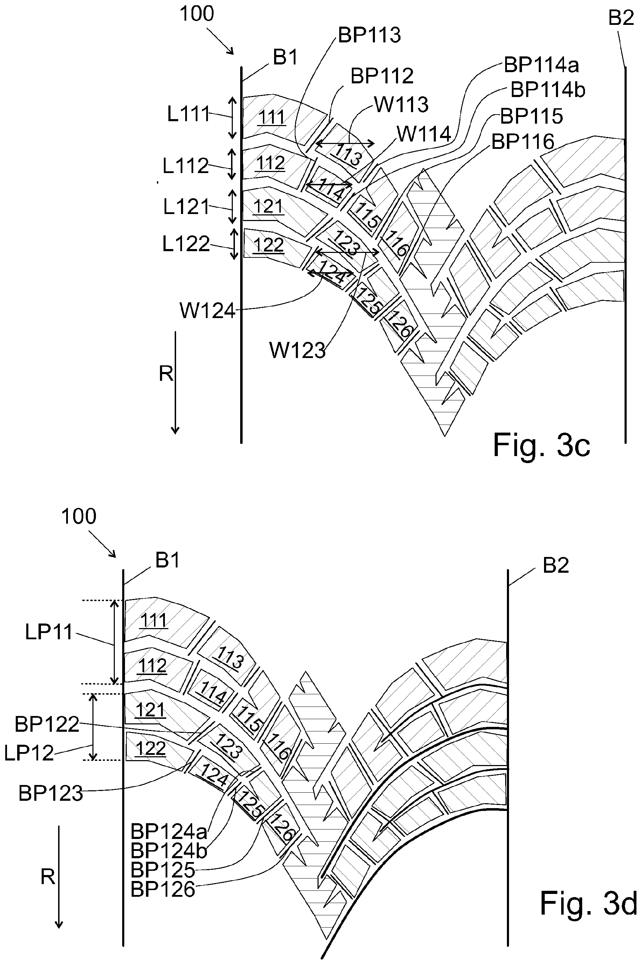

Concerning the first aspect, and with reference to Fig. 3c, in the claimed invention, a length L111 of the first primary first block 111 as measured in a direction that is parallel to the first boundary B1 is greater than a length L112 of the first primary second block 112 as measured in the same direction. In other words, L111 > L112 in Fig. 3c. Preferably, the length L111 of the first primary first block 111 is at least 15 %, such as from 25 % to 35 %, greater than the length L112 of the first primary second block 112.

Moreover, for a similar reason, in an embodiment, a width W113 of the first primary third block 113 as measured in a direction that is perpendicular to the first boundary B1 and a direction of a thickness of the tread block arrangement is different from a width W114 of the first primary fourth block 114 as measured in the same direction. In other words, W113 ≠ W114. In the embodiment of Fig. 3c the width W113 of the first primary third block 113 is greater than a width W114 of the first primary fourth block 114, i.e. W113 > W114. The difference in the widths may be at least 5 %.

Concerning the second aspect, in an embodiment, the first primary second pitch groove PG112 (shown in Fig. 3b) is provided with a bottom protrusion BP112 (shown in Fig. 3c) and the first primary third pitch groove PG113 (shown in Fig. 3b) is provided with a bottom protrusion BP113 (shown in Fig. 3c).

Preferably, the first primary main groove G11 is not provided with a bottom protrusion for not preventing the water/slush from running to the boundary B1. Preferably, the first primary first pitch groove PG111 is not provided with a bottom protrusion for not preventing the water/slush from running to the boundary B1.

The first secondary pitch P12 may comprise as many tread blocks as the first primary pitch P11. However, as will be detailed, the lengths of the pitches may be different. Concerning the tread blocks of the first secondary pitch, in an embodiment, the first secondary pitch P12 comprises a first secondary first block 121 defining the first boundary B1. The first secondary pitch P12 comprises a first secondary second block 122. The first secondary second block 122 defines the first boundary B1. The first secondary second block 122 is separated from the first secondary first 121 block only by a portion of a first secondary first pitch groove PG121. In Fig. 3b, the first secondary first pitch groove PG121 is preferably substantially parallel to the first primary main groove G11. What has been said about the directions of the grooves PG111 and G11 being substantially parallel applies to the grooves PG121 and G11 *mutatis mutandis.* As indicated above, at the same location, an angle of up to 10 degrees may be left between the directions of extension of these grooves.

The first secondary pitch P12 comprises a first secondary third block 123. The first secondary third block 123 is arranged a distance apart from the first boundary B1, i.e. the block 123 does not define the first boundary B1. The first secondary third block 123 is separated from the first secondary first block 121 only by a first secondary second pitch groove PG122. A longitudinal direction of the first secondary second pitch groove PG122 forms an angle of at least 60 degrees with a longitudinal direction of the first secondary first pitch groove PG121. The first secondary second pitch groove PG122 may be substantially transversal to the first secondary first pitch groove PG121. The first secondary second pitch groove PG122 extends from the first secondary first pitch groove PG121 in its longitudinal direction.

The first secondary pitch P12 comprises a first secondary fourth block 124. The first secondary fourth block 124 is arranged a distance apart from the first boundary B1, i.e. the block 124 does not define the first boundary B1. The first secondary fourth block 124 is separated from the first secondary second block 122 only by a first secondary third pitch groove PG123. A longitudinal direction of the first secondary third pitch groove PG123 forms an angle of at least 60 degrees with a longitudinal direction of the first secondary first pitch groove PG121. The first secondary third pitch groove PG123 may be substantially transversal to the first secondary first pitch groove PG121. The first secondary third pitch groove PG123 extends from the first secondary first pitch groove PG121 in its longitudinal direction. The first secondary fourth block 124 is separated from the first secondary third block 123 only by a portion of the first secondary first pitch groove PG121.

In an embodiment, the first secondary first block 121, the first secondary second block 122, the first secondary third block 123, and the first secondary fourth block 124 are arranged on the first region BR1 (see Fig. 3a) having the width WBR1 as discussed above. At least a part of the first secondary third block 123 is arranged between the central line CL and the first secondary first block 121, and at least a part of the first secondary fourth block 124 is arranged between the central line CL and the first secondary second block 122. These features, in combination, have the effect that a width of the tread blocks at first region BR1 is small, which improves the grip in particular in the axial direction of the tire.

In an embodiment, the first secondary pitch P12 comprises only two tread blocks that define the first boundary B1; as indicated above, such tread blocks are the first secondary first block 121 and the first secondary second block 122. No tread block is arranged between a tread block (121, 122) that defines the first boundary B1 and the first boundary B1.

Concerning the first aspect of supporting the tread blocks, in an embodiment, a length L121 of the first secondary first block 121 as measured in a direction that is parallel to the first boundary B1 is greater than a length L122 of the first secondary second block 122 as measured in the same direction. In other words, L121 > L122. The lengths are shown in Fig. 3c. Preferably, the length L121 of the first secondary first block 121 is at least 15 %, such as 25 % to 35 %, greater than the length L122 of the first secondary second block 122.

Moreover, for a similar reason, in an embodiment, a width W123 of the first secondary third block 123 as measured in a direction that is perpendicular to the first boundary B1 and a direction of a thickness of the tread block arrangement is different from a width W124 of the first secondary fourth block 124 as measured in the same direction. In other words, W123 ≠ W124. The widths are shown in Fig. 3c. In the embodiment of Fig. 3c the width W123 of the first secondary third block 123 is greater than a width W124 of the first secondary fourth block 124, i.e. W123 > W124. The difference in the widths may be at least 5 %.

As shown in Fig. 3b, the pitches P11 and P12, as well as the tread blocks therein are arranged such that the first primary second block 112 is separated from the first secondary first block 121 only by a portion of the first primary main groove G11. Moreover, the first primary fourth block 114 is separated from the first secondary first block 121 only by a portion of the first primary main groove G11. This has the effect that the first secondary first block 121, of which length L121 is large in the sense discussed above, supports also the first primary second block 112 and the first primary fourth block 114.

Concerning the second aspect of supporting the tread blocks, in an embodiment, the first secondary second pitch groove PG122 is provided with a bottom protrusion BP122 and the first secondary third pitch groove PG123 is provided with a bottom protrusion BP123. As for the numbering of the pitch grooves, reference is made to Fig. 3b; and for the numbering of the bottom protrusions, reference is made to Fig. 3d. Such bottom protrusions are shown also in Figs. 4c and 4d. Therein, the bottom protrusions are shown by rectangles drawn within the pitch groove that has been provided by the bottom protrusion. It is noted that the pitch grooves that are substantially parallel to the main grooves are free from bottom protrusions. Thus, e.g. the first primary fourth pitch groove PG114 comprises two bottom protrusions (BP114a and BP114b) separated from each other by the first primary first pitch groove PG111, See Figs. 3c and 4c.

For example, the first primary first pitch groove PG111 is not provided with a bottom protrusion for not preventing the water/slush from running to the boundary B1. Moreover, the first secondary first pitch groove PG121 is not provided with a bottom protrusion for not preventing the water/slush from running to the boundary B1.

As for the size of the bottom protrusion BP112, BP113, BP122, BP123, etc., a height of a bottom protrusion, as measured from the level of a bottom of the pitch groove having the bottom protrusion, is preferably from 1 mm to 5 mm, such as from 2.0 mm to 3.5 mm. This, on one hand provides for the supporting effect as discussed above, and on the other hand, provides for the pitch grooves, thereby providing more tread block edges to the tread block arrangement. As detailed above, the edges of the tread blocks improve grip and traction of the tire.

The first primary pitch P11 is preferably not identical with the first secondary pitch P12. Preferably, a length LP11 of the first primary pitch P11 as defined by the length of the part of the first boundary B1 that crosses the first primary pitch P11 is greater than a length LP12 of the first secondary pitch P12 as defined by the length of the part of the first boundary B1 that crosses the first secondary pitch P12. In other words, LP11 > LP12. The lengths are shown in Fig. 3d. Preferably, the length LP11 of the first primary pitch P11 is at least 10 %, such as 10 % to 30 %, greater than the length LP12. It is noted that the first secondary pitch P12 needs not be arranged in the direction of rotation R from the first primary pitch P11, even if such numbering is indicated in the Figures. In an embodiment, the first secondary pitch P12 is arranged in the direction of rotation R from the first primary pitch P11.

A width of the tread blocks (111, 112, 121, 122) defining the first boundary B1 needs not depend on the length LP11, LP12 of the pitch comprising the tread blocks defining the first boundary B1. As an example, even if the length LP11 is greater than the length LP12, a width of a tread block (111, 112) of the first primary pitch P11, the tread block (111, 112) of the first primary pitch P11 defining the first boundary B1, may be less than (or greater than, or equal to) a width of a tread block (121, 122) of the first secondary pitch P12, the tread block (121, 122) of the first secondary pitch P12 defining the first boundary B1.

It has been found that the tread block arrangement is particularly suitable for a winter tire and/or for a tire for a mudded road. To further improve the grip of such tires, preferably, the tread blocks of the tread block arrangement are provided with sipes (SA, SB). The sipes are shown in Figs. 4c, 4d, and 5, and are applicable also to other embodiments. As for a direction of the sipes SA, SB, the sipes SB that are comprised by such tread blocks 111, 112, 121, 122 that define one of the boundaries B1, B2 have a longitudinal direction that is parallel to a longitudinal direction of the tread block that comprises the sipe. The tread blocks defining a boundary B1, B2 are inclined, whereby the direction of extension of these sipes SB forms an angle of at least 10 degrees with the transversal (or axial) direction ST, AX. As for the inclination of the tread blocks defining the first boundary, reference is made to the discussion related to the angle α1, see below. However, the blocks not defining a boundary B1, B2, such as the blocks 113, 114, 115, 116, 123, 124, 125, 126, and 300, are, preferably, provided with sipes SA that extend in a direction that is substantially parallel to the transversal (or axial) direction ST, AX. Thus, the direction of extension of these sipes SA forms an angle of at most 15 degrees (such as zero) with the transversal (or axial) direction ST, AX.

Moreover, for these reasons, the material of the tread blocks should not be too hard. Thus, preferably, the tread block arrangement comprises a tread block of which hardness in from 48 to 62 in the Shore (A) scale.

Moreover, for these reasons, in an embodiment, the tread block arrangement 100 or the tire 800 comprises a first marking 830 indicative of the tread block arrangement 100 or the tire 800 being configured to be used for driving on mud and/or snow (see Fig. 1a). Typically, the first marking 830 is a combination of letters and symbols like "M+S".

As detailed above, the closing direction of the V-shape provided by the first and second pitches, e.g. P11 and P21, define the intended direction of rotation R when driving forward (see e.g. Fig. 2b). However, in order to further guide the user, the direction of rotation may be also otherwise indicated. Thus, in an embodiment, the tread block arrangement 100 or the tire 800 comprises a second marking 840 indicative of a direction of rotation for the tread block arrangement 100 or the tire 800 (see Fig. 1a). Typically, the second marking 840 is a text "Rotation" in connection with an arrow indicating the direction of rotation, such as "ROTATION →".

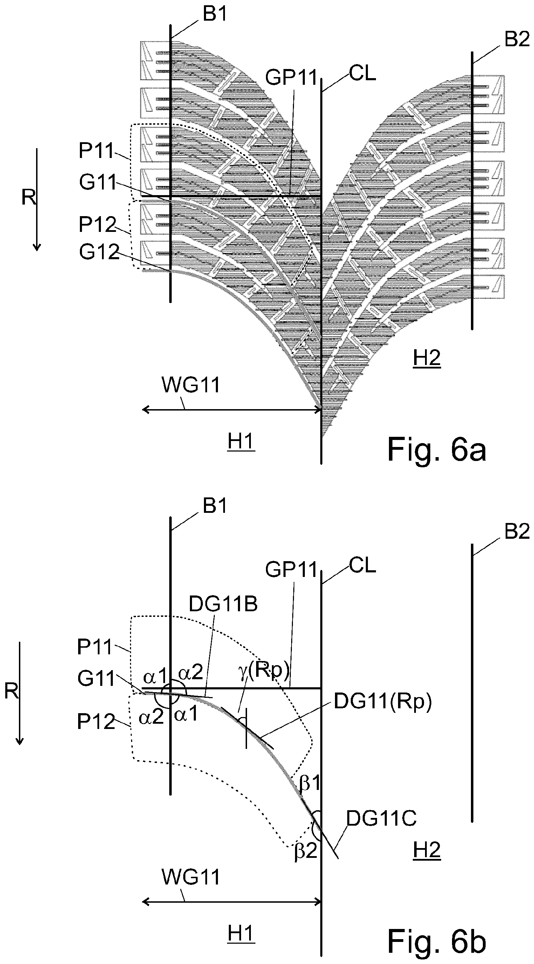

As indicated above, the first primary pitch P11 extends in an inclined manner from the first boundary B1 towards the central line CL, and the first secondary pitch P12 separated from the first primary pitch P11 by a first primary main groove G11. The inclined manner has the technical effect that water and/or slush is effectively guided away from the contact patch of the tire. Therefore and with reference to Fig. 6a, in an embodiment the first primary main groove G11 extends to the central line CL. However, the first primary main groove G11 need not extend to the central line CL as long as a width WG11 of the first main groove is large. Herein the term width refers to the projection of the first main groove G11 to a plane that is defined by the transversal direction and the direction of a thickness of the tread block arrangement; and of all such planes, such a plane that is closest to the first primary main groove. As an example, such a projection GP11 of the first primary main groove G11 is shown in Fig. 6a. For example the width WG11 of the primary main groove G11 (see Fig. 6a) may be at least 80 % or at least 90 % of the width WH1 of the first half H1 (see Fig. 3a). The first primary main groove G11 may cross the central line CL. Thus, the width WG11 of the primary main groove G11 (see Fig. 6a) may be e.g. at most 110 %, such as from 90 % to 110 %, of the width WH1 of the first half H1 (see Figs. 3a and 6a).

To characterize the the inclined manner the first primary pitch P11 extends, Fig. 6b shows the first primary main groove G11 in more detail. Moreover, Fig. 6b shows the longitudinal direction DG11B (i.e. direction of extension) of the first primary main groove G11 at the point where it crosses the first boundary B1. Moreover, Fig. 6b shows the longitudinal direction DG11C (i.e. direction of extension) of the first primary main groove G11 at the point from where it starts, and which is not located on the boundary B1 of the tire. Thus, the point from where the first primary main groove G11 starts, is located on the same side of the first boundary B1 as the central line CL. The point may e.g. be the point where the groove G11 contacts the central line CL.

As indicated in Fig. 6b, the direction DG11C forms two angles, β1 and β2, with the longitudinal direction SL (i.e. the direction of the central line CL). To clarify, the crossing of DG11C and CL forms four angles, having two equally large pairs of angles, as well known. The angle β1 opens to such a direction that has a negative component the direction R of rotation and is directed from the central line CL towards the first boundary B1. Thus, the angle β1 forms, with main grooves oh the second half H2, the V-shape that opens reverse to the direction of rotation R. To guide the water and/or slush properly to the first primary main groove from the contact patch of the tire, preferably, the angle β1 is 20 to 40 degrees, more preferably 25 to 35 degrees.

As indicated in Fig. 6b, the direction DG11B forms two angles, α1 and α2, with the longitudinal direction SL (i.e. the direction of the first boundary B1). The angle α1 opens to such a direction that has a negative component the direction R of rotation and is directed from the central line towards the first boundary (see in particular the angle α1 located on top-left from the crossing of DG11B and B1 in Fig. 6b). However, an equally large angle α1 opens towards the point from where the first primary main groove G11 starts, as defined above (see in particular the angle α1 located on bottom-right from the crossing of DG11B and B1 in Fig. 6b). Typically α1 is less than or equal to α2. To guide the water and/or slush properly out from the first primary main groove, preferably, the angle α1 is greater than the angle β1. As an example, in an embodiment, the angle α1 is 55 to 100 degrees, more preferably 60 to 90 degrees.

The angles β1 and α1 can be determined e.g. from a direction of an edge of a tread block limiting the first primary main groove G11.

Referring to Fig. 6c, if the angle α1 is defined as an angle between [i] a direction of an edge of a tread block (112, 121) that limits the first primary main groove G11 and defines a part of the first boundary B1 (see e.g. Figs. 3a and 6c) and [ii] the longitudinal direction of the tread block arrangement, e.g. the circumferential direction of the tire, the angle α1 is preferably from 55 to 80 degrees, such as from 60 to 75 degrees. What has been said about the opening direction of α1 above applies.

Referring to Fig. 6c, if the angle β1 is defined as an angle between [i] a direction of such a part of the central block 300 that limits the first primary main groove G11 (see e.g. Figs. 3b and 6c) and [ii] the longitudinal direction of the tread block arrangement, e.g. the circumferential direction of the tire, the angle β1 is preferably from 25 to 35 degrees. What has been said about the opening direction of β1 above applies.

Moreover, the direction DG11(Rp) in which the first primary main groove G11 extends depends on the point of observation Rp where the direction is defined, as depicted in Fig. 6b. At the point of observation Rp the direction DG11(Rp) forms an angle γ(Rp) with the direction of the central line CL. The angle γ(Rp) opens to such a direction that has a negative component the direction R of rotation and is directed from the central line CL towards the first boundary B1. As indicated in Fig. 6b, the magnitude of the angle γ(Rp) increases from β1 to α1, when the point of observation Rp moves from the point from where the first primary main groove G11 starts (see above) to the point where it crosses the first boundary B1 (see above). This improves guidance of water and/or slush. Preferably, the magnitude of the angle γ(Rp) increases from β1 to α1 continuously. Preferably the magnitude of the angle γ(Rp) is from β1 to α1 at all points between the point from where the first primary main groove G11 starts (see above) to the point where it crosses the first boundary B1 (see above). Preferably, the angle γ(Rp) does not decrease even locally, when the point of observation Rp moves in the direction from the central line CL towards the first boundary B1.

Referring to Fig. 6c, an angle φ1 between the boundary B1 and the central line CL can be defined as an angle between [i] a direction of an edge of a tread block (115, 116, 125, 126) that limits the first primary main groove G11, that is separated from the central block 300 by at least one groove (PG126, PG125), and that is separated from a tread block (112, 121) that defines the first boundary B1 by at least two grooves (PG124, PG122, see e.g. Figs. 3b and 6c) and [ii] the longitudinal direction of the tread block arrangement, e.g. the circumferential direction of the tire. When such defined, the angle φ1 is preferably from 30 to 50 degrees. As indicated in Fig. 6c, the angle φ1 opens to the same direction as α1 and β1.

What has been said about the angles concerning the first primary main groove G11 applies to the first secondary main groove G12 *mutatis mutandis.*

As detailed above, the first primary first pitch groove PG111 is, in an embodiment, substantially parallel to the first primary main groove G11.

Moreover, the first secondary first pitch groove PG121 is, in an embodiment, substantially parallel to the first primary main groove G11 (for a more precise definition of the directions, see above). The angles between the other pitch grooves have been discussed above. Thus, the direction of the first primary main groove G11 to large extent defines a shape of a network defined by the main and pitch grooves.

Referring to Figs. 2a - 7b, the tread block arrangement comprises a second half H2. Referring to Fig. 3a, the second half H2 comprises a second primary pitch P21 and a second secondary pitch P22. The second primary pitch P21 comprises the tread blocks 211, 212, 213, and 214, as depicted in Fig. 3a. The second secondary pitch P22 comprises the tread blocks 221, 222, 223, and 224, as depicted in Fig. 3a.

The second primary pitch P21 extends in an inclined manner from the second boundary B2 towards the central line CL. The second secondary pitch P22 extends in an inclined manner from the second boundary B2 towards the central line CL. The second secondary pitch P22 is separated from the second primary pitch P21 by a second primary main groove G21. Preferably, the second secondary pitch P22 is separated from the second primary pitch P21 only by the second primary main groove G21. Moreover, the second primary pitch P21 comprises at least four tread blocks arranged on a second region BR2 of the second half H2 and separated from each other by grooves; and the second secondary pitch P22 comprises at least four tread blocks arranged on the second region BR2 and separated from each other by grooves. The second region BR2 comprises the second boundary B2, which is defined by the tread block, particularly the blocks 211, 212, 221, and 222. A width WBR2 of the second region BR2 is at most 80 % of a width WH2 of the second half H2; preferably at most 75 % or at most 70 %. In an embodiment, the width WH2 of the second half H2 is equal to the width WH1 of the first half. In an embodiment, the width WBR2 of the second region BR2 is equal to the width WBR1 of the first region BR1.

In an embodiment, the second primary pitch P21 comprises only two tread blocks that define the second boundary B2. Such tread blocks may be the second primary first block 211 and the second primary second block 212. No tread block is arranged between the second boundary B2 and such a tread block (211, 212) that defines the second boundary B2; see Fig. 3a.

In an embodiment, the second secondary pitch P22 comprises only two tread blocks that define the second boundary B2. Such tread blocks may be the second secondary first block 221 and the second secondary second block 222. No tread block is arranged between the second boundary B2 and such a tread block (221, 222) that defines the second boundary B2; see Fig. 3a.

In an embodiment, the second primary pitch P21 further comprises a tread block 215, and, optionally also 216. In an embodiment, the second secondary pitch P22 further comprises a tread block 225, and, optionally also 226.

Preferably, the second primary pitch P21 is reflective symmetric with the first primary pitch P11 about a plane defined by the central line CL and a direction of thickness of the tread block arrangement. However, as detailed in Fig. 3a they are not (at least not necessarily) arranged at the same position. For example, in the embodiment of Fig. 3a, the second primary pitch P21 should be moved in the negative direction of rotation (i.e. -R) to obtain a pattern that is reflective symmetric with the pattern of the first primary pitch P11. Moreover, the second secondary pitch P22 is, in an embodiment, reflective symmetric at least after movement in rotational direction (in either +R or -R direction), with the first secondary pitch P12.

Referring to Figs. 7a and 7b, preferably this applies to the whole tire and/or the whole tread block arrangement. In these figures, the tread blocks of the first half H1 are arranged such that they form a first pattern and the tread blocks of the second half H2 are arranged such that they form a second pattern. Clearly this applies to the embodiments of all the figures 2a - 6a also.

For example, in the embodiment of Fig. 7a, the second pattern (of the second half H2) is reflective symmetric with the first pattern (of the first half H1) about a plane, of which normal is the transversal direction ST of the tread block arrangement. In Fig. 7a, the plane of symmetry comprises the central line CL. Moreover, since the transversal direction ST is also parallel to the axial direction AX (see Figs. 1a and 1b) the plane of symmetry comprises the direction of thickness of the tread block arrangement.

However, as discussed above and detailed in Figs. 6a and 7b, the halves H1, H2 need not be aligned. More specifically, in the embodiment of Figs. 7b and 6a, the second pattern (of the second half H2) is reflective symmetric about the plane (as discussed above) with such a pattern that is obtainable from the first pattern (of the first half H1) by translational movement of the first pattern in the direction of the central line CL. In case of the tire, the translational movement involves rotating only the first half H1 about the axis AX. In case of a tread band, the translational movement involves moving only the first half H1 in the direction of the central line CL. Naturally the tread block arrangement as such is not moved by such movement. The movement should be considered as a mental act for defining the shape of the tread block arrangement. For example, when moving the first pattern of the first half H1 of Fig. 7b in the direction R by the distance LR as shown in Fig. 7b, the full pattern formed by the first pattern (of the first half) and the second pattern (of the second half) becomes reflective symmetric about the plane, of which normal is the transversal direction of the tread block arrangement and which comprises the central line CL. The reflective symmetry applies preferably at least to the tread blocks and grooves (both main grooves and pitch grooves), but may apply also to the sipes of the tread blocks.

As an example and with reference to Fig. 3a, the blocks 211, 212, 213, and 214 form a pattern that is reflective symmetric about the plane with such a pattern that is a pattern of the blocks 111, 112, 113, and 114, respectively, after moving each one of the latter blocks (111 to 114) by a same amount in the rotational direction R. In a similar way, the blocks 221, 222, 223, and 224 form a pattern that is reflective symmetric about the plane to such a pattern that is a pattern of the blocks 121, 122, 123, and 124, respectively, after moving each one of the latter blocks (121 to 124) by a same amount in the rotational direction R, see Fig. 3a.

Referring to Fib. 7b, preferably, the tread block arrangement 100 is not reflective symmetric about the plane that comprises the central line CL and the direction of thickness of the tread block arrangement; i.e. the distance LR needed to move the first half H1 to obtain a reflective symmetric pattern is not zero. However, the movement may be in either direction, whereby the distance LR may be negative or positive.

The distance LR being not zero has the effect that a first main groove (G11, G12, G13, ...) of the first half H1 is not aligned with a second main groove (G21, G22, G23, ...) of the second half H2. This is beneficial, because then the contact patch always comprises a main groove for guiding the slush/water to a boundary (B1 or B2).

Figures 7a and 7b show two lines IL1 and IL2 to guide the eye for determining the reflective symmetry. The line IL1 is parallel to the transversal direction ST and intersects the first boundary B1 at the same point as the first primary main groove G11, which is arranged between the first primary pitch P11 and the first secondary pitch P12. The line IL2 is parallel to the transversal direction ST and intersects the second boundary B2 at the same point as the second primary main groove G21, which is arranged between the second primary pitch P21 and the second secondary pitch P22. In order to obtain the patterns of the halves H1, H2 such that they are reflective symmetric, naturally also the first primary main groove G11 must be reflective symmetric with, i.e. at least aligned with, the second primary main groove G21. Thus, the distance LR needed for the movement is the distance between these two lines IL1, IL2. Concerning Fig. 7a, therein the distance LR would be zero, whereby the two lines IL1, IL2 overlap.

Preferably, an absolute value of the distance LR is less than a length (LP11, LP12) of the smaller pitch (P11, P12) adjacent to the first primary main groove G11. Thus, preferably, an absolute value of the distance LR is from 10 % to 90 %, more preferably from 25 % to 75 %, of the smaller of the two lengths: the length LP11 of the first primary pitch P11 and the length LP12 of the first secondary pitch P12. These lengths have been defined above in connection with Fig. 3d.

Referring to Figs. 3a to 3d, preferably the first primary pitch P11 comprises further tread blocks in order to increase the amount of tread block edges. Thus, in an embodiment, the first primary pitch P11 comprises a first primary fifth block 115. The first primary fifth block 115 is separated from the first primary third block 113 only by a portion of a first primary fourth pitch groove PG114. The first primary fifth block 115 is separated from the first primary fourth block 114 only by a portion of the first primary fourth pitch groove PG114.

A longitudinal direction of the first primary fourth pitch groove PG114 forms an angle of at least 60 degrees with a longitudinal direction of the first primary first pitch groove PG111. The first primary fourth pitch groove PG114 may be substantially transversal to the first primary first pitch groove PG111. The first primary fourth pitch groove PG114 extends from the first primary first pitch groove PG111 in its longitudinal direction. The first primary fourth pitch groove PG114 crosses the first primary first pitch groove PG111. In other words, the first primary fourth pitch groove PG114 extends on both sides of the first primary first pitch groove PG111 (see Fig. 3b).

Preferably, the first primary fourth pitch groove PG114 is provided with a bottom protrusion BP114a that is arranged between the first primary fifth block 115 and the first primary third block 113. Preferably, the first primary fourth pitch groove PG114 is provided with a bottom protrusion BP114b (i.e. another bottom protrusion) that is arranged between the first primary fifth block 115 and the first primary fourth block 114 (see Fig. 3c). In this way, the first primary first pitch groove PG111 is not provided with the protrusion even if it crosses the first primary fourth pitch groove PG114.

In an embodiment, the first primary first pitch groove PG111 ends within a smallest convex space encompassing the first primary fifth block 115. Thus, in the embodiment, the first primary first pitch groove PG111 crosses a boundary of the smallest convex space encompassing the first primary fifth block 115. In other words, in an embodiment, the first primary fifth block 115 limits a part of a side wall of the first primary first pitch groove PG111 and the first primary fifth block 115 limits an end of the first primary first pitch groove PG111 (see Fig. 3b).

For reasons of increasing the number of tread blocks, in an embodiment, the first primary pitch P11 comprises a first primary sixth block 116. The first primary sixth block 116 is separated from the first primary fifth block 115 only by a first primary fifth pitch groove PG115. Preferably, the first primary fifth pitch groove PG115 is provided with a bottom protrusion BP115. A longitudinal direction of the first primary fifth pitch groove PG115 forms an angle of at most 30 degrees with a longitudinal direction of the first primary fourth pitch groove PG114. The first primary fifth pitch groove PG115 may be substantially parallel to the first primary fourth pitch groove PG114.

In an embodiment, the first primary sixth block 116 is separated from the integral middle block 300 only by a first primary sixth pitch groove PG116. In an embodiment, the first primary sixth pitch groove PG116 is provided with a bottom protrusion BP116. A longitudinal direction of the first primary sixth pitch groove PG116 forms an angle of at most 30 degrees with a longitudinal direction of the first primary fifth pitch groove PG115. The first primary sixth pitch groove PG116 may be substantially parallel to the first primary fifth pitch groove PG115.

This applies also to the second half H2. I.e. in an embodiment, the blocks 211, 212, 213, 214, 215 and 216 of the second primary pitch P21 form a pattern that is reflective symmetric about the plane to such a pattern that is a pattern of the blocks 111, 112, 113, 114, 115 and 116 of the first primary pitch P11, respectively, after moving each one of the latter blocks by a same amount in the rotational direction, see Fig. 3a.

Referring to Figs. 3a to 3d, preferably also the first secondary pitch P12 comprises further tread blocks in order to increase the amount of tread block edges. Thus, in an embodiment, the first secondary pitch P12 comprises a first secondary fifth block 125. The first secondary fifth block 125 is separated from the first secondary third block 123 only by a portion of a first secondary fourth pitch groove PG124. The first secondary fifth block 125 is separated from the first secondary fourth block 124 only by a portion of the first secondary fourth pitch groove PG124.

A longitudinal direction of the first secondary fourth pitch groove PG124 forms an angle of at least 60 degrees with a longitudinal direction of the first secondary first pitch groove PG121. The first secondary fourth pitch groove PG124 may be substantially transversal to the first secondary first pitch groove PG121. The first secondary fourth pitch groove PG124 extends from the first secondary first pitch groove PG121 in its longitudinal direction. The first secondary fourth pitch groove PG124 crosses the first secondary first pitch groove PG121. In other words, the first secondary fourth pitch groove PG124 extends on both sides of the first secondary first pitch groove PG121 (see Fig. 3b).

Preferably, the first secondary fourth pitch groove PG124 is provided with a bottom protrusion BP124a that is arranged between the first secondary fifth block 125 and the first secondary third block 123. Preferably, the first secondary fourth pitch groove PG124 is provided with a bottom protrusion BP124b (i.e. another bottom protrusion) that is arranged between the first secondary fifth block 125 and the first secondary fourth block 124 (see Fig. 3d). In this way, the first secondary first pitch groove PG121 is not provided with the protrusion even if it crosses the first secondary fourth pitch groove PG124.

In an embodiment, the first secondary first pitch groove PG121 ends within a smallest convex space encompassing the first secondary fifth block 125. Thus, in the embodiment, the first secondary first pitch groove PG121 crosses a boundary of the smallest convex space encompassing the first secondary fifth block 125. In other words, in an embodiment, the first secondary fifth block 125 limits a part of a side wall of the first secondary first pitch groove PG121 and the first secondary fifth block 125 limits an end of the first secondary first pitch groove PG121 (see Fig. 3b).

For reasons of increasing the number of tread blocks, in an embodiment, the first secondary pitch P12 comprises a first secondary sixth block 126. The first secondary sixth block 126 is separated from the first secondary fifth block 125 only by a first secondary fifth pitch groove PG125. Preferably, the first secondary fifth pitch groove PG125 is provided with a bottom protrusion BP125. A longitudinal direction of the first secondary fifth pitch groove PG125 forms an angle of at most 30 degrees with a longitudinal direction of the first secondary fourth pitch groove PG124. The first secondary fifth pitch groove PG125 may be substantially parallel to the first secondary fourth pitch groove PG124.

In an embodiment, the first secondary sixth block 126 is separated from the integral middle block 300 only by a first secondary sixth pitch groove PG126. In an embodiment, the first secondary sixth pitch groove PG126 is provided with a bottom protrusion BP126. A longitudinal direction of the first secondary sixth pitch groove PG126 forms an angle of at most 30 degrees with a longitudinal direction of the first secondary fifth pitch groove PG125. The first secondary sixth pitch groove PG126 may be substantially parallel to the first secondary fifth pitch groove PG125.

This applies also to the second half H2 of the tread block arrangement. I.e. in an embodiment, the blocks 221, 222, 223, 224, 225 and 226 of the second secondary pitch P22 form a pattern that is reflective symmetric about the plane to such a pattern that is a pattern of the blocks 121, 122, 123, 124, 125 and 126 of the first secondary pitch P12, respectively, after moving each one of the latter blocks by a same amount in the rotational direction, see Fig. 3a.

What has been said about the bottom protrusions of the pitch grooves on the first half H1 applies, *mutatis mutandis,* on the second half H2. Such bottom protrusions are depicted by rectangles shown within the pitch grooves in Figs. 4c (without reference numbers on the second half H2) and 4d (without reference numbers). As indicated therein, the bottom protrusions are preferably only applied in such pitch grooves of which direction forms a large angle with the direction of the main grooves. For more detailed definition of these directions, see above.

## Claims

1. A tread block arrangement (100) for a tire (800) or for a tread band (820), the tread block arrangement (100) comprising tread blocks comprising
- a first bevelled edge (BE1) and a second bevelled edge (BE2), the tread blocks defining
- a first boundary (B1) being the part where the first bevelled edge (BE1) changes to a tread (810),
- a second boundary (B2) being the part where the second bevelled edge (BE2) changes to the tread (810), the second boundary (B2) being parallel to the first boundary (B1), and
- a central line (CL) between the first boundary (B1) and the second boundary (B2), such that
- a first half (H1) is arranged on a first side of the central line (CL), the first half (H1) comprising
- a first primary pitch (P11) extending in an inclined manner from the first boundary (B1) towards the central line (CL) and
- a first secondary pitch (P12) separated from the first primary pitch (P11) by a first primary main groove (G11), wherein
- the first primary pitch (P11) comprises at least four tread blocks arranged within a first region (BR1) of the first half (H1) and separated from each other by grooves,
- the first secondary pitch (P12) comprises at least four tread blocks arranged within the first region (BR1) and separated from each other by grooves,
- the first region (BR1) comprises the first boundary (B1), and
- a width (WBR1) of the first region (BR1) is at most 75 % of a width (WH1) of the first half (H1), wherein
- the first half (H1) and the second half (H2) meet at the central line (CL) so that no part of the tread block arrangement is arranged between the first half (H1) and the second half (H2),
- the first primary pitch (P11) comprises
o a first primary first block (111) defining the first boundary (B1),
o a first primary second block (112) defining the first boundary (B1), the first primary second block (112) begin separated from the first primary first block (111) by a portion of a first primary first pitch groove (PG111),
o a first primary third block (113) arranged a distance apart from the first boundary (B1) and separated from the first primary first block (111) by a first primary second pitch groove (PG112), and
o a first primary fourth block (114) arranged a distance apart from the first boundary (B1) and separated from the first primary second block (112) by a first primary third pitch groove (PG113) and from the a first primary third block (113) by a portion of the first primary first pitch groove (PG111), wherein
- the first primary first block (111), the first primary second block (112), the first primary third block (113), and the first primary fourth block (114) are arranged on the first region (BR1),
- at least a part of the first primary third block (113) is arranged between the central line (CL) and the first primary first block (111),
- at least a part of the first primary fourth block (114) is arranged between the central line (CL) and the first primary second block (112), and
- a length (L111) of the first primary first block (111) as measured in a direction that is parallel to the first boundary (B1) is greater than a length (L112) of the first primary second block (112) as measured in the direction that is parallel to the first boundary (B1).

2. The tread block arrangement of the claim 1, wherein
- the first primary pitch (P11) comprises only two tread blocks that define the first boundary (B1) and
- the first secondary pitch (P12) comprises only two tread blocks that define the first boundary (B1).

3. The tread block arrangement of the claim 1 or 2, wherein
- the first primary first pitch groove (G111) is substantially parallel to the first primary main groove (G11) or forms an angle of at most 10 degrees with the first primary main groove (G11),
- a longitudinal direction of the first primary second pitch groove (PG112) forms an angle of at least 60 degrees with a longitudinal direction of the first primary first pitch groove (PG111), and
- a longitudinal direction of the first primary third pitch groove (PG113) forms an angle of at least 60 degrees with a longitudinal direction of the first primary first pitch groove (PG111).

4. The tread block arrangement of the claim 3, wherein
- a width (W113) of the first primary third block (113) as measured in a direction that is perpendicular to the first boundary (B1) is different from a width (W114) of the first primary fourth block (114) as measured in the direction that is perpendicular to the first boundary (B1).

5. The tread block arrangement of claim 3 or 4, wherein
- the first primary second pitch groove (PG112) is provided with a bottom protrusion (BP112) and
- the first primary third pitch groove (PG113) is provided with a bottom protrusion (BP113);
preferably,
- a height of one or both of the bottom protrusions (BP112, BP113) is from 2 mm to 5 mm.

6. The tread block arrangement of any of the claims 1 to 5, wherein
- the first secondary pitch (P12) comprises
o a first secondary first block (121) defining the first boundary (B1),
o a first secondary second block (122) defining the first boundary (B1), the first secondary second block (122) begin separated from the first secondary first block (121) by a portion of a first secondary first pitch groove (PG121),
o a first secondary third block (123) arranged a distance apart from the first boundary (B1) and separated from the first secondary first block (121) by a first secondary second pitch groove (PG122), and
o a first secondary fourth block (124) arranged a distance apart from the first boundary (B1) and separated from the first secondary second block (122) by a first secondary third pitch groove (PG123) and from the first secondary third block (123) by a portion of the first secondary first pitch groove (PG121), wherein
- the first secondary first block (121), the first secondary second block (122), the first secondary third block (123), and the first secondary fourth block (124) are arranged on the first region (BR1),
- at least a part of the first secondary third block (123) is arranged between the central line (CL) and the first secondary first block (121), and
- at least a part of the first secondary fourth block (124) is arranged between the central line (CL) and the first secondary second block (122);
preferably,
- the first secondary first pitch groove (G121) is substantially parallel to the first primary main groove (G11) or forms an angle of at most 10 degrees with the first primary main groove (G11),
- a longitudinal direction of the first secondary second pitch groove (PG122) forms an angle of at least 60 degrees with a longitudinal direction of the first secondary first pitch groove (PG121), and
- a longitudinal direction of the first secondary third pitch groove (PG123) forms an angle of at least 60 degrees with a longitudinal direction of the first secondary first pitch groove (PG121).

7. The tread block arrangement of the claim 6, wherein
- a length (L121) of the first secondary first block (121) as measured in a direction that is parallel to the first boundary (B1) is greater than a length (L122) of the first secondary second block (112) as measured in the direction that is parallel to the first boundary (B1) and/or
- a width (W123) of the first secondary third block (123) as measured in a direction that is perpendicular to the first boundary (B1) is different from a width (W124) of the first secondary fourth block (124) as measured in the direction that is perpendicular to the first boundary (B1).

8. The tread block arrangement of claim 6 or 7, wherein
- the first secondary second pitch groove (PG122) is provided with a bottom protrusion (BP122) and
- the first secondary third pitch groove (PG123) is provided with a bottom protrusion (BP123);
preferably,
- a height of one or both of the bottom protrusions (BP122, BP123) is from 2 mm to 5 mm.

9. The tread block arrangement (100) of any of the claims 1 to 8, comprising
- an integral middle block (300) that propagates through the tread block arrangement (100) in a direction that is parallel to the first boundary (B1) and between the first boundary (B1) and the second boundary (B2), wherein
- the middle block (300) is separated from the first primary pitch (P11) by a groove and from the first secondary pitch (P12) by a groove,
- at least a tread block of the first primary pitch (P11), such as the first primary third block (113) and the first primary fourth block (114), is/are arranged between the first boundary (B1) and the central line (CL), and
- at least a tread block of the first secondary pitch (P12), such as the first secondary third block (123) and the first secondary fourth block (124), is/are arranged between the first boundary (B1) and the central line (CL).

10. The tread block arrangement of any of the claims 1 to 9, wherein
- a length (LP11) of the first primary pitch (P11) as measured along the first boundary (B1) is greater than a length (LP12) of the first secondary pitch (P12) as measured along the first boundary (B1).

11. The tread block arrangement of any of the claims 1 to 10, wherein
- a width (WG11) of the first primary main groove (G11) as measured in a direction that is perpendicular to the direction of the central line (CL) is at least 80 % of a width (WH1) of the first half (H1),
- the first primary main groove (G11) extends in a first longitudinal direction (DG11B) of the first primary main groove G11 at the point where the first primary main groove (G11) crosses the first boundary (B1), the first longitudinal direction (DG11B) forming an angle (α1) of 55 to 100 degrees with a direction of the first boundary (B1), and
- the first primary main groove (G11) extends in a second longitudinal direction (DG11C) of the first primary main groove (G11) from a point where it starts and which is arranged on the same side of the first boundary (B1) as the central line (CL), the second longitudinal direction (DG11C) forming an angle (β1) of 20 to 40 degrees with a direction of the central line (CL).

12. The tread block arrangement of any of the claims 1 to 11, wherein the primary half (H1) comprises
[A]
- a first tertiary pitch (P13) extending in an inclined manner from the first boundary (B1) towards the central line (CL), wherein
- the first secondary pitch (P12) is arranged next to the first tertiary pitch (P13) and separated therefrom by a first secondary main groove (G12) and/or
[B]
- a first zeroth ranking pitch (P10) extending in an inclined manner from the first boundary (B1) towards the central line (CL), wherein
- the first primary pitch (P11) is arranged next to the first zeroth ranking pitch (P10) and separated therefrom by a first zeroth ranking main groove (G10); preferably,
- the first tertiary pitch (P13) is identical with the first secondary pitch (P12) and/or
- the first zeroth ranking pitch (P10) is identical with the first primary pitch (P11); more preferably, the primary half (H1) comprises
- a first quaternary pitch (P14) extending in an inclined manner from the first boundary (B1) towards the central line (CL), wherein
- the first tertiary pitch (P13) is arranged next to the first quaternary pitch (P14) and separated therefrom by a first tertiary main groove (G13).

13. The tread block arrangement (100) of any of the claims 1 to 12, wherein
- the tread blocks of the first half (H1) are arranged such that they form a first pattern and
- the tread blocks of the second half (H2) are arranged such that they form a second pattern that is reflective symmetric about a plane, of which normal is the transversal direction of the tread block arrangement, with the first pattern or with such a pattern that is obtainable from the first pattern by translational movement of the first pattern in the direction of the central line (CL).

14. The tread block arrangement (100) of the claim 13, wherein
- the second pattern is reflective symmetric about the plane with such a pattern that is obtainable from the first pattern by translational movement of the first pattern in the direction of the central line (CL) by a distance (LR), wherein
- an absolute value of the distance (LR) is from 10 % to 90 % of the smaller (min(LP11,LP12)) of a length (LP11) of the first primary pitch (P11) and a length (LP12) of the first secondary pitch (P12), wherein
- the length (LP11) of the first primary pitch (P11) is the length of the part of the first boundary (B1) that intersects the first primary pitch (P11) and
- the length (LP12) of the first secondary pitch (P12) is the length of the part of the first boundary (B1) that intersects the first secondary pitch (P12).

15. The tread block arrangement of any of the claims 1 to 14, wherein
- the first primary pitch (P11) comprises a first primary fifth block (115) separated from the first primary third block (113) by a portion of a first primary fourth pitch groove (PG114) and from the first primary fourth block (114) by a portion of the first primary fourth pitch groove (PG114);
preferably
- the first primary fourth pitch groove (PG114) is provided with a bottom protrusion;
more preferably
- the first primary fifth block (115) limits a part of a side wall of the first primary first pitch groove (PG111) and
- the first primary fifth block (115) limits an end of the first primary first pitch groove (PG111).

16. The tread block arrangement of any of the claims 1 to 15, wherein
- the first primary pitch (P11) further comprises a first primary sixth block (116), and
- the first primary sixth block (116) is separated from a/the integral middle block (300) by a first primary sixth pitch groove (PG116);
preferably,
- the first primary sixth pitch groove (PG116) is provided with a bottom protrusion;
more preferably
- the first primary sixth block (116) is separated from the first primary fifth block (115) by a first primary fifth pitch groove (PG115);
more preferably
- the first primary fifth pitch groove (PG115) is provided with a bottom protrusion.

## Patentansprüche

1. Eine Laufflächenblockanordnung (100) für einen Reifen (800) oder für ein Laufflächenstreifen (820), wobei die Laufflächenblockanordnung (100) Laufflächenblöcke umfasst,
- die eine erste abgeschrägte Kante (BE1) und eine zweite abgeschrägte Kante (BE2) umfassen, dabei definieren die Laufflächenblöcke
- eine erste Begrenzung (B1), die den Teil bildet, an dem die erste abgeschrägte Kante (BE1) in eine Lauffläche (810) übergeht,
- eine zweite Begrenzung (B2), die den Teil bildet, an dem die zweite abgeschrägte Kante (BE2) in die Lauffläche (810) übergeht, wobei die zweite Begrenzung (B2) parallel zu der ersten Begrenzung (B1) verläuft, und
- eine zentrale Linie (CL) zwischen der ersten Begrenzung (B1) und der zweiten Begrenzung (B2), so dass
- eine erste Hälfte (H1) auf einer ersten Seite der zentralen Linie (CL) angeordnet ist, wobei die erste Hälfte (H1) Folgendes umfasst
- eine erste primäre Teilung (P11), die sich schräg von der ersten Begrenzung (B1) in Richtung der zentralen Linie (CL) erstreckt und
- eine erste sekundäre Teilung (P12), die von der ersten primären Teilung (P11) durch eine erste primäre Hauptrille (G11) getrennt ist, wobei
- die erste primäre Teilung (P11) mindestens vier Laufflächenblöcke umfasst, die innerhalb eines ersten Bereichs (BR1) der ersten Hälfte (H1) angeordnet und durch Rillen voneinander getrennt sind,
- die erste sekundäre Teilung (P12) mindestens vier Laufflächenblöcke umfasst, die innerhalb eines ersten Bereichs (BR1) angeordnet und durch Rillen voneinander getrennt sind,
- der erste Bereich (BR1) die erste Begrenzung (B1) umfasst, und
- eine Breite (WBR1) des ersten Bereichs (BR1) höchstens 75 % einer Breite (WH1) der ersten Hälfte (H1) beträgt, wobei
- die erste Hälfte (H1) und die zweite Hälfte (H2) sich an der zentralen Linie (CL) treffen, so dass kein Teil der Laufflächenblockanordnung zwischen der ersten Hälfte (H1) und der zweiten Hälfte (H2) angeordnet ist,
- die erste primäre Teilung (P11) umfasst
∘ einen ersten primären ersten Block (111), der die erste Begrenzung (B1) definiert,
∘ einen ersten primären zweiten Block (112), der die erste Grenze (B1) definiert, dabei beginnt der erste primäre zweite Block (112) separat von dem ersten primären ersten Block (111), getrennt durch einen Abschnitt der ersten primären ersten Teilungsrille (PG111),
∘ einen ersten primären dritten Block (113), der in einem Abstand von der ersten Begrenzung (B1) angeordnet und von dem ersten primären ersten Block (111) durch eine erste primäre zweite Teilungsrille (PG112) getrennt ist, und
∘ einen ersten primären vierten Block (114), der in einem Abstand von der ersten Begrenzung (B1) angeordnet und von dem ersten primären zweiten Block (112) durch eine erste primäre dritte Teilungsnut (PG113) und von dem ersten primären dritten Block (113) durch einen Teil der ersten primären ersten Teilungsnut (PG111) getrennt ist, wobei
- der erste primäre erste Block (111), der erste primäre zweite Block (112), der erste primäre dritte Block (113) und der erste primäre vierte Block (114) in dem ersten Bereich (BR1) angeordnet sind,
- zumindest ein Teil des ersten primären dritten Blocks (113) zwischen der zentralen Linie (CL) und dem ersten primären ersten Block (111) angeordnet ist,
- zumindest ein Teil des ersten primären vierten Blocks (114) zwischen der zentralen Linie (CL) und dem ersten primären zweiten Block (112) angeordnet ist, und
- die Länge (L111) des ersten primären ersten Blocks (111), gemessen in einer Richtung, die parallel zu der ersten Begrenzung (B1) verläuft, größer als die Länge (L112) des ersten primären zweiten Blocks (112), gemessen in der Richtung, die parallel zu der ersten Begrenzung (B1) verläuft, ist.

2. Die Laufflächenblockanordnung nach Anspruch 1, wobei
- die erste primäre Teilung (P11) nur zwei Laufflächenblöcke umfasst, die die erste Begrenzung (B1) definieren und
- die erste sekundäre Teilung (P12) nur zwei Laufflächenblöcke umfasst, die die erste Begrenzung (B1) definieren.

3. Die Laufflächenblockanordnung nach Anspruch 1 oder 2, wobei
- die erste primäre erste Teilungsrille (G111) im Wesentlichen parallel zur ersten primären Hauptrille (G11) verläuft oder einen Winkel von höchstens 10 Grad mit der ersten primären Hauptrille (G11) bildet,
- eine Längsrichtung der ersten primären zweiten Teilungsrille (PG112) einen Winkel von mindestens 60 Grad mit einer Längsrichtung der ersten primären ersten Teilungsrille (PG111) bildet, und
- eine Längsrichtung der ersten primären dritten Teilungsrille (PG113) einen Winkel von mindestens 60 Grad mit einer Längsrichtung der ersten primären ersten Teilungsrille (PG111) bildet.

4. Die Laufflächenblockanordnung nach Anspruch 3, wobei
- die Breite (W113) des ersten primären dritten Blocks (113), gemessen in einer Richtung, die senkrecht zu der ersten Begrenzung (B1) ist, sich von der Breite (W114) des ersten primären vierten Blocks (114), gemessen in der Richtung, die senkrecht zu der ersten Begrenzung (B1) ist, unterscheidet.

5. Die Laufflächenblockanordnung nach Anspruch 3 oder 4, wobei
- die erste primäre zweite Teilungsrille (PG112) mit einem unteren Vorsprung (BP112) versehen ist und
- die erste primäre dritte Teilungsrille (PG113) mit einem unteren Vorsprung (BP113) versehen ist; vorzugsweise
- die Höhe des einen oder der beiden unteren Vorsprünge (BP112, BP113) von 2 mm bis 5 mm beträgt.

6. Die Laufflächenblockanordnung nach einem der Ansprüche 1 bis 5, wobei
- die erste sekundäre Teilung (P12) Folgendes umfasst
∘ einen ersten sekundären ersten Block (121), der die erste Begrenzung (B1) definiert,
∘ einen ersten sekundären zweiten Block (122), der die erste Grenze (B1) definiert, dabei beginnt der erste sekundäre zweite Block (122) separat von dem ersten sekundären ersten Block (121), getrennt durch einen Abschnitt der ersten sekundären ersten Teilungsrille (PG121),
∘ einen ersten sekundären dritten Block (123), der in einem Abstand von der ersten Begrenzung (B1) angeordnet und von dem ersten sekundären ersten Block (121) durch eine erste sekundäre zweite Teilungsrille (PG122) getrennt ist, und
∘ einen ersten sekundären vierten Block (124), der in einem Abstand von der ersten Begrenzung (B1) angeordnet und von dem ersten sekundären zweiten Block (122) durch eine erste sekundäre dritte Teilungsnut (PG123) und von dem ersten sekundären dritten Block (123) durch einen Teil der ersten sekundären ersten Teilungsnut (PG121) getrennt ist, wobei
- der erste sekundäre erste Block (121), der erste sekundäre zweite Block (122), der erste sekundäre dritte Block (123) und der erste sekundäre vierte Block (124) in dem ersten Bereich (BR1) angeordnet sind,
- zumindest ein Teil des ersten sekundären dritten Blocks (123) zwischen der zentralen Linie (CL) und dem ersten sekundären ersten Block (121) angeordnet ist,
- zumindest ein Teil des ersten sekundären vierten Blocks (124) zwischen der zentralen Linie (CL) und dem ersten sekundären zweiten Block (122) angeordnet ist; vorzugsweise
- die erste sekundäre erste Teilungsrille (G121) im Wesentlichen parallel zur ersten primären Hauptrille (G11) verläuft oder einen Winkel von höchstens 10 Grad mit der ersten primären Hauptrille (G11) bildet,
- eine Längsrichtung der ersten sekundären zweiten Teilungsrille (PG122) einen Winkel von mindestens 60 Grad mit einer Längsrichtung der ersten sekundären ersten Teilungsrille (PG121) bildet, und
- eine Längsrichtung der ersten sekundären dritten Teilungsrille (PG123) einen Winkel von mindestens 60 Grad mit einer Längsrichtung der ersten sekundären ersten Teilungsrille (PG121) bildet.

7. Die Laufflächenblockanordnung nach Anspruch 6, wobei
- die Länge (L121) des ersten sekundären ersten Blocks (121), gemessen in einer Richtung, die parallel zu der ersten Begrenzung (B1) verläuft, größer als die Länge (L122) des ersten sekundären zweiten Blocks (112), gemessen in der Richtung, die parallel zu der ersten Begrenzung (B1) verläuft, ist und/oder
- die Breite (W123) des ersten sekundären dritten Blocks (123), gemessen in einer Richtung, die senkrecht zu der ersten Begrenzung (B1) ist, sich von der Breite (W124) des ersten sekundären vierten Blocks (124), gemessen in der Richtung, die senkrecht zu der ersten Begrenzung (B1) ist, unterscheidet.

8. Die Laufflächenblockanordnung nach Anspruch 6 oder 7, wobei
- die erste sekundäre zweite Teilungsrille (PG122) mit einem unteren Vorsprung (BP122) versehen ist und
- die erste sekundäre dritte Teilungsrille (PG123) mit einem unteren Vorsprung (BP123) versehen ist; vorzugsweise
- die Höhe des einen oder der beiden unteren Vorsprünge (BP122, BP123) von 2 mm bis 5 mm beträgt.

9. Die Laufflächenblockanordnung (100) nach einem der Ansprüche 1 bis 8, die Folgendes umfasst
- einen integralen mittleren Block (300), der sich durch die Laufflächenblockanordnung (100) in einer Richtung ausbreitet, die parallel zu der ersten Begrenzung (B1) und zwischen der ersten Begrenzung (B1) und der zweiten Begrenzung (B2) liegt, wobei
- der mittlere Block (300) von der ersten primären Teilung (P11) durch eine Rille und von der ersten sekundären Teilung (P12) durch eine Rille getrennt ist,
- mindestens ein Laufflächenblock der ersten primären Teilung (P11), wie der erste primäre dritte Block (113) und der erste primäre vierte Block (114), der zwischen der ersten Begrenzung (B1) und der zentralen Linie (CL) angeordnet ist, und
- mindestens ein Laufflächenblock des ersten sekundären Pitches (P12), wie der erste sekundäre dritte Block (123) und der erste sekundäre vierte Block (124), der zwischen der ersten Begrenzung (B1) und der zentralen Linie (CL) angeordnet ist.

10. Die Laufflächenblockanordnung nach einem der Ansprüche 1 bis 9, wobei
- die Länge (LP11) der ersten primären Teilung (P11), gemessen entlang der ersten Begrenzung (B1), größer als die Länge (LP12) der ersten sekundären Teilung (P12), gemessen entlang der ersten Begrenzung (B1), ist.

11. Die Laufflächenblockanordnung nach einem der Ansprüche 1 bis 10, wobei
- die Breite (WG11) der ersten primären Hauptrille (G11), gemessen in einer Richtung, die senkrecht zur Richtung der zentralen Linie (CL) verläuft, mindestens 80 % der Breite (WH1) der ersten Hälfte (H1) beträgt,
- die erste primäre Hauptrille (G11) sich in einer ersten Längsrichtung (DG11B) der ersten primären Hauptrille G11 an dem Punkt erstreckt, an dem die erste primäre Hauptrille (G11) die erste Begrenzung (B1) kreuzt, wobei die erste Längsrichtung (DG11B) einen Winkel (α1) von 55 bis 100 Grad mit einer Richtung der ersten Begrenzung (B1) bildet, und
- die erste primäre Hauptrille (G11) sich in einer zweiten Längsrichtung (DG11C) der ersten primären Hauptrille (G11) von einem Punkt erstreckt, an dem sie beginnt und der auf derselben Seite der ersten Begrenzung (B1) wie die zentrale Linie (CL) angeordnet ist, wobei die zweite Längsrichtung (DG11C) einen Winkel (β1) von 20 bis 40 Grad mit einer Richtung der zentralen Linie (CL) bildet.

12. Die Laufflächenblockanordnung nach einem der Ansprüche 1 bis 11, wobei die primäre Hälfte (H1) Folgendes umfasst
[A]
- eine erste tertiäre Teilung (P13), die sich schräg von der ersten Begrenzung (B1) in Richtung der zentralen Linie (CL) erstreckt, wobei
- die erste sekundäre Teilung (P12) neben der ersten tertiären Teilung (P13) angeordnet und von dieser durch eine erste sekundäre Hauptrille (G12) getrennt ist und/oder
[B]
- eine erste nullrangierte Teilung (P10), die sich schräg von der ersten Begrenzung (B1) in Richtung der zentralen Linie (CL) erstreckt, wobei
- die erste primäre Teilung (P11) neben der ersten nullrangigen Teilung (P10) angeordnet und von dieser durch eine erste nulltrangige Hauptrille (G10) getrennt ist; vorzugsweise
- die erste tertiäre Teilung (P13) identisch mit der ersten sekundären Teilung (P12) ist und/oder
- die erste nullrangierte Teilung (P10) mit der ersten primären Teilung (P11) identisch ist; noch bevorzugter umfasst die primäre Hälfte (H1)
- eine erste quaternäre Teilung (P14), die sich schräg von der ersten Begrenzung (B1) in Richtung der zentralen Linie (CL) erstreckt, wobei
- die erste tertiäre Teilung (P13) neben der ersten quaternären Teilung (P14) angeordnet und von dieser durch eine erste tertiäre Hauptrille (G13) getrennt ist.

13. Die Laufflächenblockanordnung (100) nach einem der Ansprüche 1 bis 12, wobei
- die Laufflächenblöcke der ersten Hälfte (H1) so angeordnet sind, dass sie ein erstes Muster bilden und
- die Laufflächenblöcke der zweiten Hälfte (H2) so angeordnet sind, dass sie ein zweites Muster - das spiegelsymmetrisch zu einer Ebene ist, deren Normale die Querrichtung der Laufflächenblockanordnung ist - mit dem ersten Muster oder mit einem solchen Muster bilden, das aus dem ersten Muster durch eine Verschiebebewegung des ersten Musters in Richtung der zentralen Linie (CL) zu erhalten ist.

14. Die Laufflächenblockanordnung (100) nach Anspruch 13, wobei
- das zweite Muster spiegelsymmetrisch zur Ebene mit einem solchen Muster ist, das aus dem ersten Muster durch eine Verschiebebewegung des ersten Musters in Richtung der zentralen Linie (CL) um einen Abstand (LR) zu erhalten ist, wobei
- ein absoluter Wert des Abstands (LR) 10 % bis 90 % des kleineren Werts (min(LP11,LP12)) der Länge (LP11) der ersten primären Teilung (P11) und der Länge (LP12) der ersten sekundären Teilung (P12) beträgt, wobei
- die Länge (LP11) der ersten primären Teilung (P11) die Länge des Teils der ersten Begrenzung (B1) ist, der die erste primäre Teilung (P11) schneidet, und
- die Länge (LP12) der ersten sekundären Teilung (P12) die Länge des Teils der ersten Begrenzung (B1) ist, der die erste sekundäre Teilung (P12) schneidet.

15. Die Laufflächenblockanordnung nach einem der Ansprüche 1 bis 14, wobei
- die erste primäre Teilung (P11) einen ersten primären fünften Block (115) umfasst, der von dem ersten primären dritten Block (113) durch einen Abschnitt einer ersten primären vierten Teilung (PG114) und von dem ersten primären vierten Block (114) durch einen Teil der ersten primären vierten Teilung (PG114) getrennt ist; vorzugsweise
- die erste primäre vierte Teilungsrille (PG114) mit einem unteren Vorsprung versehen ist;
noch bevorzugter
- der erste primäre fünfte Block (115) einen Teil einer Seitenwand der ersten primären ersten Teilung (PG111) begrenzt und
- der erste primäre fünfte Block (115) das Ende der ersten primären ersten Teilungsrille (PG111) begrenzt.

16. Die Laufflächenblockanordnung nach einem der Ansprüche 1 bis 15, wobei
- die erste primäre Teilung (P11) ferner einen ersten primären sechsten Block (116) umfasst, und
- der erste primäre sechste Block (116) von einem/dem integralen mittleren Block (300) durch eine erste primäre sechste Teilungsrille (PG116) getrennt ist; vorzugsweise
- die erste primäre sechste Teilungsrille (PG116) mit einem unteren Vorsprung versehen ist;
noch bevorzugter
- der erste primäre sechste Block (116) von dem ersten primären fünften Block (115) durch eine erste primäre fünfte Teilungsnut (PG115) getrennt ist;
noch bevorzugter
- die erste primäre fünfte Teilungsrille (PG115) mit einem unteren Vorsprung versehen ist.

## Revendications

1. Agencement de blocs de bande de roulement (100) pour un pneu (800) ou pour une bande de roulement (820), l'agencement de blocs de bande de roulement (100) comprenant des blocs de bande de roulement comprenant
- un premier bord biseauté (BE1) et un second bord biseauté (BE2), les blocs de bande de roulement définissant
- une première limite (B1) étant la partie où le premier bord biseauté (BE1) se transforme en bande de roulement (810),
- une seconde limite (B2) étant la partie où le second bord biseauté (BE2) se transforme en bande de roulement (810), la seconde limite (B2) étant parallèle à la première limite (B1), et
- une ligne centrale (CL) entre la première limite (B1) et la seconde limite (B2), de telle sorte que
- une première moitié (H1) est disposée sur un premier côté de la ligne centrale (CL), la première moitié (H1) comprenant
- un premier pas primaire (P11) s'étendant de manière inclinée de la première limite (B1) vers la ligne centrale (CL) et
- un premier pas secondaire (P12) séparé du premier pas primaire (P11) par une première rainure principale primaire (G11), dans lequel
- le premier pas primaire (P11) comprend au moins quatre blocs de bande de roulement disposés à l'intérieur d'une première région (BR1) de la première moitié (H1) et séparés les uns des autres par des rainures,
- le premier pas secondaire (P12) comprend au moins quatre blocs de bande de roulement disposés à l'intérieur de la première région (BR1) et séparés les uns des autres par des rainures,
- la première région (BR1) comprend la première limite (B1), et
- une largeur (WBR1) de la première région (BR1) représente au plus 75 % d'une largeur (WH1) de la première moitié (H1), dans lequel
- la première moitié (H1) et la seconde moitié (H2) se rejoignent au niveau de la ligne centrale (CL) de sorte qu'aucune partie de l'agencement de blocs de bande de roulement n'est disposée entre la première moitié (H1) et la seconde moitié (H2),
- le premier pas primaire (P11) comprend
∘ un premier premier bloc primaire (111) définissant la première limite (B1),
∘ un premier deuxième bloc primaire (112) définissant la première limite (B1), le premier deuxième bloc primaire (112) étant séparé du premier premier bloc primaire (111) par une partie d'une première rainure primaire de premier pas (PG111),
∘ un premier troisième bloc primaire (113) disposé à une distance de la première limite (B1) et séparé du premier premier bloc primaire (111) par une première rainure primaire de deuxième pas (PG112), et
∘ un premier quatrième bloc primaire (114) disposé à une distance de la première limite (B1) et séparé du premier deuxième bloc primaire (112) par une première rainure primaire de troisième pas (PG113) et du premier troisième bloc primaire (113) par une partie de la première rainure primaire de premier pas (PG111), dans lequel
- le premier premier bloc primaire (111), le premier deuxième bloc primaire (112), le premier troisième bloc primaire (113) et le premier quatrième bloc primaire (114) sont disposés sur la première région (BR1),
- au moins une partie du premier troisième bloc primaire (113) est disposée entre la ligne centrale (CL) et le premier premier bloc primaire (111),
- au moins une partie du premier quatrième bloc primaire (114) est disposée entre la ligne centrale (CL) et le premier deuxième bloc primaire (112), et
- une longueur (L111) du premier premier bloc primaire (111), telle que mesurée dans une direction qui est parallèle à la première limite (B1), est supérieure à une longueur (L112) du premier deuxième bloc primaire (112), telle que mesurée dans la direction qui est parallèle à la première limite (B1).

2. Agencement de blocs de bande de roulement selon la revendication 1, dans lequel
- le premier pas primaire (P11) comprend uniquement deux blocs de bande de roulement qui définissent la première limite (B1) et
- le premier pas secondaire (P12) comprend uniquement deux blocs de bande de roulement qui définissent la première limite (B1).

3. Agencement de blocs de bande de roulement selon la revendication 1 ou 2, dans lequel
- la première rainure primaire de premier pas (G111) est sensiblement parallèle à la première rainure principale primaire (G11) ou forme un angle d'au plus 10 degrés avec la première rainure principale primaire (G11),
- une direction longitudinale de la première rainure primaire de deuxième pas (PG112) forme un angle d'au moins 60 degrés avec une direction longitudinale de la première rainure primaire de premier pas (PG111), et
- une direction longitudinale de la première rainure primaire de troisième pas (PG113) forme un angle d'au moins 60 degrés avec une direction longitudinale de la première rainure primaire de premier pas (PG111).

4. Agencement de blocs de bande de roulement selon la revendication 3, dans lequel
- une largeur (W113) du premier troisième bloc primaire (113), telle que mesurée dans une direction qui est perpendiculaire à la première limite (B1), est différente d'une largeur (W114) du premier quatrième bloc primaire (114), telle que mesurée dans la direction qui est perpendiculaire à la première limite (B1).

5. Agencement de blocs de bande de roulement selon la revendication 3 ou 4, dans lequel
- la première rainure primaire de deuxième pas (PG112) est dotée d'une saillie inférieure (BP112) et
- la première rainure primaire de troisième pas (PG113) est dotée d'une saillie inférieure (BP113) ;
de préférence,
- la hauteur de l'une ou des deux saillies inférieures (BP112, BP113) est comprise entre 2 mm et 5 mm.

6. Agencement de blocs de bande de roulement selon l'une quelconque des revendications 1 à 5, dans lequel
- le premier pas secondaire (P12) comprend
o un premier premier bloc secondaire (121) définissant la première limite (B1),
o un premier deuxième bloc secondaire (122) définissant la première limite (B1), le premier deuxième bloc secondaire (122) étant séparé du premier premier bloc secondaire (121) par une partie d'une première rainure secondaire de premier pas (PG121),
o un premier troisième bloc secondaire (123) disposé à une distance de la première limite (B1) et séparé du premier premier bloc secondaire (121) par une première rainure secondaire de deuxième pas (PG122), et
o un premier quatrième bloc secondaire (124) disposé à une distance de la première limite (B1) et séparé du premier deuxième bloc secondaire (122) par une première rainure secondaire de troisième pas (PG123) et du premier troisième bloc secondaire (123) par une partie de la première rainure secondaire de premier pas (PG121), dans lequel
- le premier premier bloc secondaire (121), le premier deuxième bloc secondaire (122), le premier troisième bloc secondaire (123) et le premier quatrième bloc secondaire (124) sont disposés sur la première région (BR1),
- au moins une partie du premier troisième bloc secondaire (123) est disposée entre la ligne centrale (CL) et le premier premier bloc secondaire (121), et
- au moins une partie du premier quatrième bloc secondaire (124) est disposée entre la ligne centrale (CL) et le premier deuxième bloc secondaire (122) ;
de préférence,
- la première rainure secondaire de premier pas (G121) est sensiblement parallèle à la première rainure principale primaire (G11) ou forme un angle d'au plus 10 degrés avec la première rainure principale primaire (G11),
- une direction longitudinale de la première rainure secondaire de deuxième pas (PG122) forme un angle d'au moins 60 degrés avec une direction longitudinale de la première rainure secondaire de premier pas (PG121), et
- une direction longitudinale de la première rainure secondaire de troisième pas (PG123) forme un angle d'au moins 60 degrés avec une direction longitudinale de la première rainure secondaire de premier pas (PG121).

7. Agencement de blocs de bande de roulement selon la revendication 6, dans lequel
- une longueur (L121) du premier premier bloc secondaire (121), telle que mesurée dans une direction qui est parallèle à la première limite (B1), est supérieure à une longueur (L122) du premier deuxième bloc secondaire (112), telle que mesurée dans la direction qui est parallèle à la première limite (B1) et/ou
- une largeur (W123) du premier troisième bloc secondaire (123), telle que mesurée dans une direction qui est perpendiculaire à la première limite (B1), est différente d'une largeur (W124) du premier quatrième bloc secondaire (124), telle que mesurée dans la direction qui est perpendiculaire à la première limite (B1).

8. Agencement de blocs de bande de roulement selon la revendication 6 ou 7, dans lequel
- la première rainure secondaire de deuxième pas (PG122) est dotée d'une saillie inférieure (BP122) et
- la première rainure secondaire de troisième pas (PG123) est dotée d'une saillie inférieure (BP123) ;
de préférence,
- la hauteur de l'une ou des deux saillies inférieures (BP122, BP123) est comprise entre 2 mm et 5 mm.

9. Agencement de blocs de bande de roulement (100) selon l'une quelconque des revendications 1 à 8, comprenant
- un bloc médian intégré (300) qui se propage à travers l'agencement de blocs de bande de roulement (100) dans une direction qui est parallèle à la première limite (B1) et entre la première limite (B1) et la seconde limite (B2), dans lequel
- le bloc médian (300) est séparé du premier pas primaire (P11) par une rainure et du premier pas secondaire (P12) par une rainure,
- au moins un bloc de bande de roulement du premier pas primaire (P11), tel que le premier troisième bloc primaire (113) et le premier quatrième bloc primaire (114), est/sont disposé(s) entre la première limite (B1) et la ligne centrale (CL), et
- au moins un bloc de bande de roulement du premier pas secondaire (P12), tel que le premier troisième bloc secondaire (123) et le premier quatrième bloc secondaire (124), est/sont disposé(s) entre la première limite (B1) et la ligne centrale (CL).

10. Agencement de blocs de bande de roulement selon l'une quelconque des revendications 1 à 9, dans lequel
- une longueur (LP11) du premier pas primaire (P11), telle que mesurée le long de la première limite (B1), est supérieure à une longueur (LP12) du premier pas secondaire (P12), telle que mesurée le long de la première limite (B1).

11. Agencement de blocs de bande de roulement selon l'une quelconque des revendications 1 à 10, dans lequel
- une largeur (WG11) de la première rainure principale primaire (G11), telle que mesurée dans une direction qui est perpendiculaire à la direction de la ligne centrale (CL), représente au moins 80 % d'une largeur (WH1) de la première moitié (H1),
- la première rainure principale primaire (G11) s'étend dans une première direction longitudinale (DG11B) de la première rainure principale primaire G11 au point où la première rainure principale primaire (G11) traverse la première limite (B1), la première direction longitudinale (DG11B) formant un angle (α1) de 55 à 100 degrés avec une direction de la première limite (B1), et
- la première rainure principale primaire (G11) s'étend dans une seconde direction longitudinale (DG11C) de la première rainure principale primaire (G11) à partir d'un point où elle commence et qui est disposé du même côté de la première limite (B1) que la ligne centrale (CL), la seconde direction longitudinale (DG11C) formant un angle (β1) de 20 à 40 degrés avec une direction de la ligne centrale (CL).

12. Agencement de blocs de bande de roulement selon l'une quelconque des revendications 1 à 11, dans lequel la moitié primaire (H1) comprend
[A]
- un premier pas tertiaire (P13) s'étendant de manière inclinée de la première limite (B1) vers la ligne centrale (CL), dans lequel
- le premier pas secondaire (P12) est disposé à côté du premier pas tertiaire (P13) et séparé de celui-ci par une première rainure principale secondaire (G12) et/ou
[B]
- un premier pas de rang zéro (P10) s'étendant de manière inclinée de la première limite (B1) vers la ligne centrale (CL), dans lequel
- le premier pas primaire (P11) est disposé à côté du premier pas de rang zéro (P10) et séparé de celui-ci par une première rainure principale de rang zéro (G10) ;
de préférence,
- le premier pas tertiaire (P13) est identique au premier pas secondaire (P12) et/ou
- le premier pas de rang zéro (P10) est identique au premier pas primaire (P11) ; de préférence encore, la moitié primaire (H1) comprend
- un premier pas quaternaire (P14) s'étendant de manière inclinée de la première limite (B1) vers la ligne centrale (CL), dans lequel
- le premier pas tertiaire (P13) est disposé à côté du premier pas quaternaire (P14) et séparé de celui-ci par une première rainure principale tertiaire (G13).

13. Agencement de blocs de bande de roulement (100) selon l'une quelconque des revendications 1 à 12, dans lequel
- les blocs de bande de roulement de la première moitié (H1) sont disposés de manière à former un premier motif et
- les blocs de bande de roulement de la seconde moitié (H2) sont disposés de manière à former un second motif qui présente une symétrie de réflexion par rapport à un plan dont la normale est la direction transversale de l'agencement de blocs de bande de roulement, le premier motif ou un tel motif pouvant être obtenu à partir du premier motif par mouvement de translation du premier motif dans la direction de la ligne centrale (CL).

14. Agencement de blocs de bande de roulement (100) selon la revendication 13, dans lequel
- le second motif présente une symétrie de réflexion par rapport au plan, un tel motif pouvant être obtenu à partir du premier motif par un mouvement de translation du premier motif dans la direction de la ligne centrale (CL) d'une distance (LR), dans lequel
- une valeur absolue de la distance (LR) est comprise entre 10 % et 90 % de la plus petite (min(LP11,LP12)) d'une longueur (LP11) du premier pas primaire (P11) et d'une longueur (LP12) du premier pas secondaire (P12), dans lequel
- la longueur (LP11) du premier pas primaire (P11) est la longueur de la partie de la première limite (B1) qui coupe le premier pas primaire (P11) et
- la longueur (LP12) du premier pas secondaire (P12) est la longueur de la partie de la première limite (B1) qui coupe le premier pas secondaire (P12).

15. Agencement de blocs de bande de roulement selon l'une quelconque des revendications 1 à 14, dans lequel
- le premier pas primaire (P11) comprend un premier cinquième bloc primaire (115) séparé du premier troisième bloc primaire (113) par une partie d'une première rainure primaire de quatrième pas (PG114) et du premier quatrième bloc primaire (114) par une partie de la première rainure primaire de quatrième pas (PG114) ;
de préférence
- la première rainure primaire de quatrième pas (PG114) est dotée d'une saillie inférieure ;
de préférence encore
- le premier cinquième bloc primaire (115) limite une partie d'une paroi latérale de la première rainure primaire de premier pas (PG111) et
- le premier cinquième bloc primaire (115) limite une extrémité de la première rainure primaire de premier pas (PG111).

16. Agencement de blocs de bande de roulement selon l'une quelconque des revendications 1 à 15, dans lequel
- le premier pas primaire (P11) comprend en outre un premier sixième bloc primaire (116), et
- le premier sixième bloc primaire (116) est séparé d'un/du bloc médian intégré (300) par une première rainure primaire de sixième pas (PG116) ;
de préférence,
- la première rainure primaire de sixième pas (PG116) est dotée d'une saillie inférieure ;
de préférence encore
- le premier sixième bloc primaire (116) est séparé du premier cinquième bloc primaire (115) par une première rainure primaire de cinquième pas (PG115) ;
de préférence encore
- la première rainure primaire de cinquième pas (PG115) est dotée d'une saillie inférieure.
